# EUROPEAN PATENT SPECIFICATION

(11) **EP 4 336 885 B1**
(45) Date of publication and mention of the grant of the patent: **25.03.2026**
(21) Application number: 22827182.1
(22) Date of filing: 26.04.2022
(51) Int. Cl.: H04L 1/08, H04W 24/02, H04W 28/06

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 23.06.2021 CN 202110700113
(43) Date of publication of application: 13.03.2024
(73) Proprietor: Huawei Technologies Co., Ltd., Longgang Shenzhen, Guangdong 518129 (CN)
(72) Inventor: SUN, Haiyang, Shenzhen, Guangdong 518129 (CN); YU, Fang, Shenzhen, Guangdong 518129 (CN); YU, Feng, Shenzhen, Guangdong 518129 (CN)
(74) Representative: Isarpatent
(86) International application number: PCT/CN2022/089311
(87) International publication number: WO 2022/267683

(56) References cited:
- EP-A1- 3 534 564
- WO-A1-2017/171201
- WO-A1-2018/165347
- WO-A1-2020/142734
- CN-A- 108 631 962
- CN-A- 109 144 773
- US-A1- 2015 085 795
- US-A1- 2020 351 701

## Description

TECHNICAL FIELD This disclosure generally relates to the field of communication technologies.

The invention in particular relates to a communication method, a chip system, a computer program product, a first communication apparatus, and a communication system.

### BACKGROUND

In an industrial control scenario, a data packet transmission process exists. In data packets sent by one device to another device, there may be a large quantity of data packets with same content. For example, to maintain a connection between the two devices, heartbeat packets may need to be transmitted, and content of the heartbeat packets may be the same. For a receiving end of a data packet, if content of a newly received data packet is different from content of a data packet received last time, the receiving end needs to respond to the newly received data packet; or if content of a newly received data packet is the same as content of a data packet received last time, the receiving end does not need to respond to the newly received data packet.

Currently, a 5th generation system (5th generation system, 5GS) has been used in the industrial field. An industrial control related service may be transmitted by using the 5GS. For example, the industrial control related service may be transmitted by using resources such as an air interface and a core network of the 5GS. When the 5GS is used to transmit the industrial control related service, a system capacity of the 5GS is usually low to ensure low latency and reliability. It can be learned from the foregoing descriptions that a large quantity of data packets with same content may exist in the industrial control related service. Transmission of such data packets by using the 5GS causes a waste of 5GS resources. As a result, an effective capacity of the 5GS is further reduced.

US 2015/085795 discloses that a PBCH transmission can be one of CE-PBCH repetitions if the MIB and the CE-MIB carry the same information contents , i.e. the MIB and CE-MIB fields of the different transmissions correspond to a first and a second data packet as retransmissions of the same data. Furthermore, the MIB also serves as an indication to UEs that the transmited data is a retransmission. For this, signalling is used to make UEs aware of the transmission of CE-PBCH repetitions.

### SUMMARY

The object of the present invention is to provide a communication method, a chip system, a computer program product, a first communication apparatus, and a communication system, to increase an effective capacity of a 5GS. This object is solved by the attached independent claims and further embodiments and improvements of the invention are listed in the attached dependent claims.

### BRIEF DESCRIPTION OF DRAWINGS

FIG. 1A, FIG. 1B, FIG. 2A, FIG. 2B, FIG. 3A, and FIG. 3B are schematic diagrams of several application scenarios according to embodiments of this application;
FIG. 4 is a flowchart of a first communication method according to an embodiment of this application;
FIG. 5A is a schematic diagram of storing data in a UDR in a 5G system;
FIG. 5B is a schematic structural diagram of a data packet in an industrial control scenario;
FIG. 5C is a schematic diagram of content change frequency of a data packet in an industrial control scenario;
FIG. 6 is a flowchart of a second communication method according to an embodiment of this application;
FIG. 7 is a flowchart of a third communication method according to an embodiment of this application;
FIG. 8 is a schematic diagram of a QoS rule according to an embodiment of this application;
FIG. 9 is a flowchart of a fourth communication method according to an embodiment of this application;
FIG. 10 is a flowchart of a fifth communication method according to an embodiment of this application;
FIG. 11 is a flowchart of a sixth communication method according to an embodiment of this application;
FIG. 12 is a flowchart of a seventh communication method according to an embodiment of this application;
FIG. 13 is a flowchart of an eighth communication method according to an embodiment of this application;
FIG. 14 is a schematic diagram of an apparatus according to an embodiment of this application; and
FIG. 15 is a schematic diagram of another apparatus according to an embodiment of this application.

### DESCRIPTION OF EMBODIMENTS

To make objectives, the technical solutions, and advantages of embodiments of this application clearer, the following further describes embodiments of this application in detail with reference to the accompanying drawings.

In the following descriptions, some terms in embodiments of this application are explained and described, to help a person skilled in the art have a better understanding.

In embodiments of this application, a terminal device is a device having a wireless transceiver function, and may be a fixed device, a mobile device, a handheld device, a wearable device, a vehicle-mounted device, or a wireless apparatus (for example, a communication module or a chip system) built in the foregoing device. The terminal device is configured to connect people, things, machines, and the like, and may be widely used in various scenarios, for example, including but not limited to the following scenarios: cellular communication, device-to-device (device-to-device, D2D) communication, vehicle to everything (vehicle to everything, V2X), machine-to-machine/machine-type communications (machine-to-machine/machine-type communications, M2M/MTC), an internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, a smart office, a smart wearable, smart transportation, a smart city (smart city), an uncrewed aerial vehicle, and a robot. The terminal device may be sometimes referred to as user equipment (user equipment, UE), a terminal, an access station, a UE station, a remote station, a wireless communication device, a user apparatus, or the like. For ease of description, in embodiments of this application, an example in which the terminal device is UE is used for description.

A network device in embodiments of this application includes, for example, an access network device (also referred to as an access network element) and/or a core network device (also referred to as a core network element).

The access network device is a device having a wireless transceiver function, and is configured to communicate with the terminal device. The access network device includes but is not limited to a base station (BTS, NodeB, eNodeB/eNB, or gNodeB/gNB) in the foregoing communication system, a transmission reception point (t(R)ANsmission reception point, TRP), a subsequently evolved base station of 3GPP, an access node in a wireless fidelity (wireless fidelity, Wi-Fi) system, a wireless relay node, a wireless backhaul node, and the like. The base station may be a macro base station, a micro base station, a pico cell, a small cell, a relay station, or the like. A plurality of base stations may support networks using a same access technology mentioned above, or may support networks using different access technologies mentioned above. The base station may include one or more co-site or non-co-site transmission reception points. The network device may alternatively be a radio controller, a central unit (central unit, CU), and/or a distributed unit (distributed unit, DU) in a cloud radio access network (cloud radio access network, C(R)AN) scenario. The network device may alternatively be a server, a wearable device, a vehicle-mounted device, or the like. For example, a network device in a vehicle to everything (vehicle to everything, V2X) technology may be a road side unit (road side unit, RSU). An example in which the access network device is a base station is used for description below. A plurality of network devices in the communication system may be base stations of a same type, or may be base stations of different types. The base station may communicate with the terminal device, or may communicate with the terminal device via a relay station. The terminal device may communicate with a plurality of base stations in different access technologies.

The core network device is configured to implement at least one of a mobility management function, a data processing function, a session management function, a policy and charging function, and another function. Names of devices that implement core network functions in systems of different access technologies may be different. This is not limited in embodiments of this application. A 5G system is used as an example. The core network device includes an access and mobility management function (access and mobility management function, AMF), a session management function (session management function, SMF), a user plane function (user plane function, UPF), or the like.

In embodiments of this application, an apparatus configured to implement a function of a network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

In this application, unless otherwise specified, a quantity of nouns indicates "a singular noun or a plural noun", namely, "one or more". "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c. Herein, a, b, and c may be singular or plural.

It should be noted that a policy control function network element, a session management function network element, a user plane function network element, a unified data repository network element, and the like in embodiments of this application are merely names, and the names constitute no limitation on the devices. The 5G system is used as an example. The policy control function network element is, for example, a PCF, the session management function network element is, for example, an SMF, the user plane function network element is, for example, a UPF, and the unified data repository network element is, for example, a unified data repository (unified data repository, UDR). In a non-5G system, for example, in another future communication system, the policy control function network element, the session management function network element, the user plane function network element, the unified data repository network element, or the like may alternatively correspond to another network element. This is not specifically limited in embodiments of this application.

An architecture of a 5G communication system is divided into two parts: an access network and a core network. The access network is used to implement a function related to radio access. The access network includes a 3rd Generation Partnership Project (3rd Generation Partnership Project, 3GPP) access network and a non (non)-3GPP access network. The core network is connected to the access network to implement a function related to user control and management.

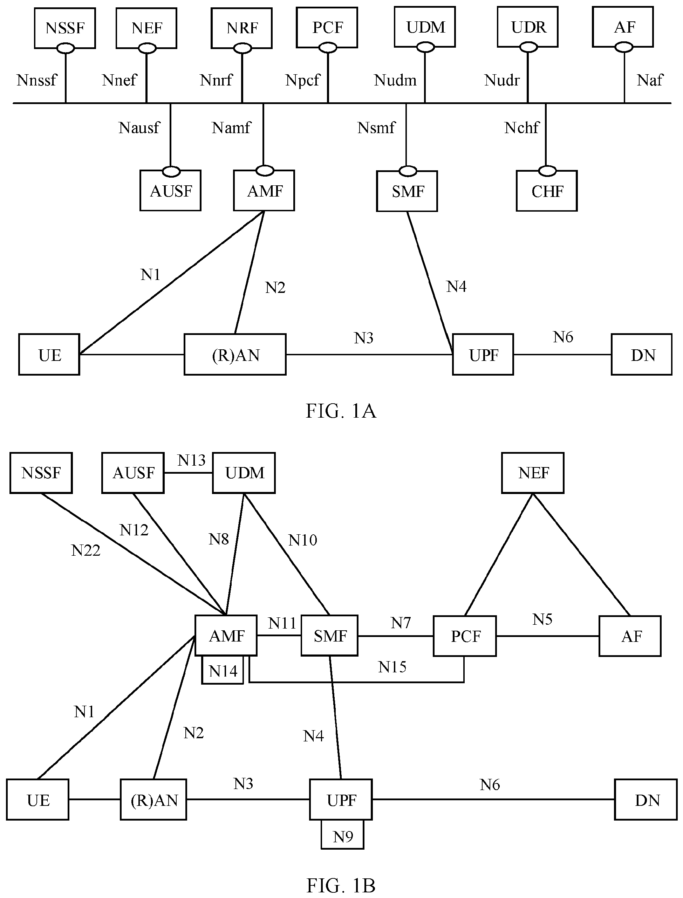

FIG. 1A is a schematic diagram of a network architecture to which an embodiment of this application is applied. The network architecture is, for example, a service-based architecture of a 5G network, and the network architecture is a non-roaming network architecture. The 5G network includes a (R)AN device, a UPF, an AMF, an SMF, an authentication server function (authentication server function, AUSF), a network slice selection function (network slice selection function, NSSF), a network exposure function (network exposure function, NEF), a network function repository function (network exposure function repository function, NRF), a policy control function (policy control function, PCF), a unified data management (unified data management, UDM), a unified data repository (unified data repository, UDR), an application function (application function, AF), a charging function (charging function, CHF), or the like. It should be noted that FIG. 1A merely provides some examples of network elements or entities in the 5G network. The 5G network may further include some network elements or entities that are not shown in FIG. 1A, such as a network data analytics function (network data analytics function, NWDAF). This is not specifically limited in embodiments of this application.

As shown in FIG. 1A, UE accesses the 5G network via the (R)AN device; the UE communicates with the AMF through an N1 interface (N1 for short); the (R)AN device communicates with the AMF through an N2 interface (N2 for short); the (R)AN device communicates with the UPF through an N3 interface (N3 for short); the SMF communicates with the UPF through an N4 interface (N4 for short); and the UPF accesses a data network (data network, DN) through an N6 interface (N6 for short). In addition, control plane functions such as the AUSF, the AMF, the SMF, the NSSF, the NEF, the NRF, the PCF, the UDM, the UDR, the CHF, and the AF shown in FIG. 1A interact with each other through service-based interfaces. For example, a service-based interface exhibited by the AUSF is Nausf, a service-based interface exhibited by the AMF is Namf, a service-based interface exhibited by the SMF is Nsmf, a service-based interface exhibited by the NSSF is Nnssf, a service-based interface exhibited by the NEF is Nnef, a service-based interface exhibited by the NRF is Nnrf, a service-based interface exhibited by the PCF is Npcf, a service-based interface exhibited by the UDM is Nudm, a service-based interface exhibited by the UDR is Nudr, a service-based interface exhibited by the CHF is Nchf, and a service-based interface exhibited by the AF is Naf. For related function descriptions and interface descriptions, refer to a diagram of a 5G system architecture (5G system architecture) in the 23.501 standard. Details are not described herein.

In addition, FIG. 1B is a schematic diagram of another network architecture to which an embodiment of this application is applied. The network architecture is a non-roaming network architecture. In the network architecture, network elements such as an NSSF, an AUSF, a UDM, UE, a (R)AN, a PCF, and an SMF can all communicate with an AMF. The AUSF can further communicate with the UDM. The UDM can further communicate with the SMF. In addition to communicating with the AMF and the UDM, the SMF can further communicate with a UPF and the PCF. The PCF can further communicate with an AF and an NEF. The NEF can further communicate with the AF. The UPF can communicate with the (R)AN and a DN. In FIG. 1B, "Nxx" between two network elements indicates an interface between the two network elements. For example, N22 indicates an interface between the NSSF and the AMF, N12 indicates an interface between the AUSF and the AMF, and N8 indicates an interface between the UDM and the AMF.

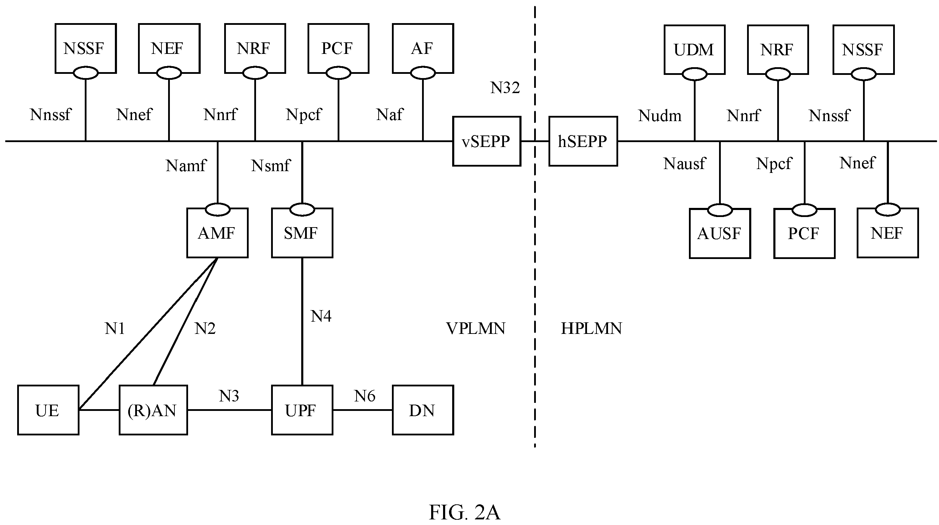

FIG. 2A is a schematic diagram of still another network architecture to which an embodiment of this application is applied. The network architecture is, for example, a service-based architecture of a 5G network. The network architecture is a roaming network architecture, for example, a local breakout (local breakout, LBO) roaming scenario. In this scenario, a service needs to be unloaded from a visited public land mobile network (visited public land mobile network, VPLMN), that is, the DN is in the VPLMN. The 5G network includes a home public land mobile network (home public land mobile network, HPLMN) and the VPLMN. The HPLMN is a home network of UE, the VPLMN is a roaming network of the UE, and the VPLMN and the HPLMN communicate with each other via a visited security edge protection proxy (visited security edge protection proxy, vSEPP) and a home security edge protection proxy (home security edge protection proxy, hSEPP).

As shown in FIG. 2A, in the VPLMN, UE accesses the 5G network via a (R)AN device; the UE communicates with an AMF through an N1 interface (N1 for short); the (R)AN device communicates with the AMF through an N2 interface (N2 for short); the (R)AN device communicates with a UPF through an N3 interface (N3 for short); an SMF communicates with the UPF through an N4 interface (N4 for short); and the UPF accesses the DN through an N6 interface (N6 for short). In addition, control plane functions such as an NSSF, an NEF, the AMF, the SMF, an NRF, a PCF, and an AF in the VPLMN shown in FIG. 2A interact with each other through service-based interfaces. For example, a service-based interface exhibited by the AMF is Namf, a service-based interface exhibited by the SMF is Nsmf, a service-based interface exhibited by the NSSF is Nnssf, a service-based interface exhibited by the NEF is Nnef, a service-based interface exhibited by the NRF is Nnrf, a service-based interface exhibited by the PCF is Npcf, and a service-based interface exhibited by the AF is Naf. Control plane functions such as a UDM, an AUSF, a PCF, an NRF, an NSSF, or an NEF in the HPLMN shown in FIG. 2A also interact with each other through service-based interfaces. For example, a service-based interface exhibited by the AUSF is Nausf, and a service-based interface exhibited by the UDM is Nudm.

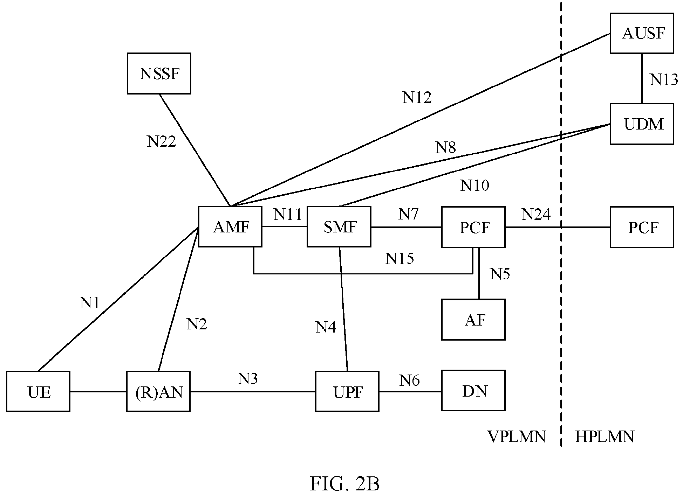

In addition, FIG. 2B is a schematic diagram of still another network architecture to which an embodiment of this application is applied. The network architecture is a roaming network architecture, for example, an LBO roaming scenario. A 5G network includes an HPLMN and a VPLMN. In the network architecture, an NSSF, UE, a (R)AN, and an SMF in the VPLMN and an AUSF and a UDM in the HPLMN can all communicate with an AMF in the VPLMN. The SMF in the VPLMN can further communicate with a UPF and a PCF (also referred to as a vPCF) in the VPLMN and a UDM in the HPLMN. The PCF in the VPLMN can further communicate with an AF in the VPLMN and a PCF (also referred to as an hPCF) in the HPLMN. The UPF in the VPLMN can further communicate with the (R)AN in the VPLMN and a DN. In FIG. 2B, "Nxx" between two network elements indicates an interface between the two network elements.

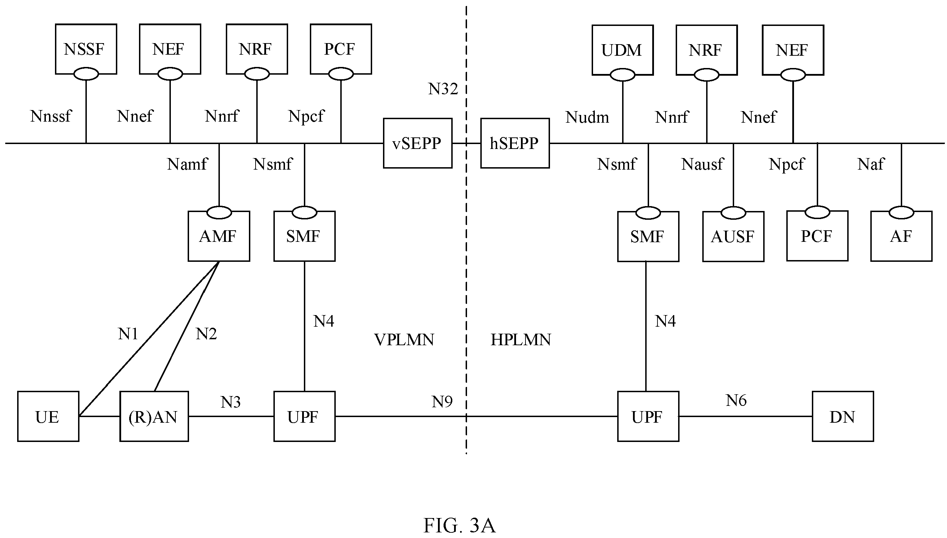

FIG. 3A is a schematic diagram of still another network architecture to which an embodiment of this application is applied. The network architecture is, for example, a service-based architecture of a 5G network. The network architecture is a roaming network architecture, for example, a home routed (home routed, HR) roaming scenario. In this scenario, a service needs to be unloaded from an HPLMN, that is, a DN is in the HPLMN. The 5G network includes the HPLMN and a VPLMN. The HPLMN is a home network of UE, the VPLMN is a roaming network of the UE, and the VPLMN and the HPLMN communicate with each other via a vSEPP and an hSEPP.

As shown in FIG. 3A, in the VPLMN, the UE accesses the 5G network via a (R)AN device; the UE communicates with an AMF through an N1 interface (N1 for short); the (R)AN device communicates with the AMF through an N2 interface (N2 for short); the (R)AN device communicates with a UPF through an N3 interface (N3 for short); and an SMF communicates with the UPF through an N4 interface (N4 for short). In the HPLMN, a UPF accesses the DN through an N6 interface (N6 for short); and the UPF communicates with an SMF through an N4 interface (N4 for short). In addition, the UPF in the VPLMN communicates with the UPF in the HPLMN through an N9 interface (N9 for short). In addition, control plane functions such as an NSSF, an NEF, the AMF, the SMF, an NRF, and a PCF in the VPLMN shown in FIG. 3A interact with each other through service-based interfaces. For example, a service-based interface exhibited by the AMF is Namf, a service-based interface exhibited by the SMF is Nsmf, a service-based interface exhibited by the NSSF is Nnssf, a service-based interface exhibited by the NEF is Nnef, a service-based interface exhibited by the NRF is Nnrf, and a service-based interface exhibited by the PCF is Npcf. Control plane functions such as a UDM, an AUSF, a PCF, an NRF, an NSSF, an AF, and an NEF in the HPLMN shown in FIG. 3A also interact with each other through service-based interfaces. For example, a service-based interface exhibited by the AUSF is Nausf, a service-based interface exhibited by the UDM is Nudm, and a service-based interface exhibited by the AF is Naf.

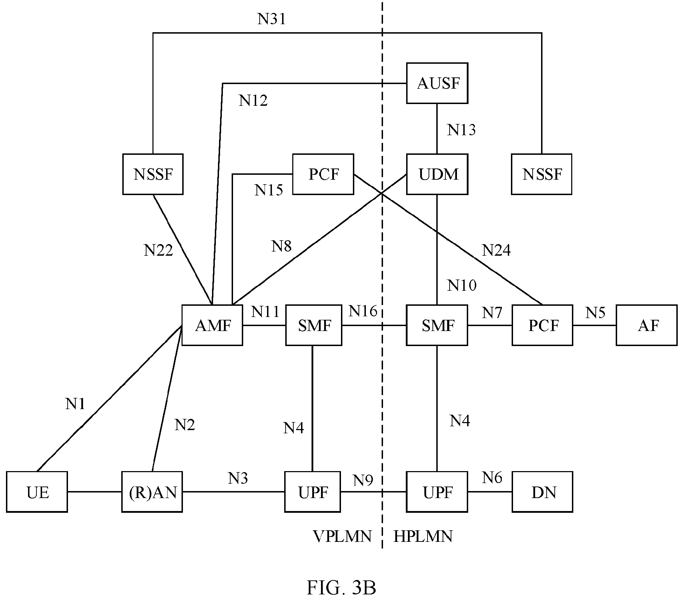

In addition, FIG. 3B is a schematic diagram of still another network architecture to which an embodiment of this application is applied. The network architecture is a roaming network architecture, for example, an HR roaming scenario. A 5G network includes an HPLMN and a VPLMN. In the network architecture, an NSSF, UE, a (R)AN, an SMF, and a PCF in the VPLMN and an AUSF and a UDM in the HPLMN can all communicate with an AMF in the VPLMN. The SMF in the VPLMN can further communicate with a UPF in the VPLMN and an SMF in the HPLMN. The PCF in the VPLMN can further communicate with a PCF in the HPLMN. The UPF in the VPLMN can further communicate with the (R)AN in the VPLMN and a UPF in the HPLMN. The NSSF in the VPLMN can further communicate with an NSSF in the HPLMN. The SMF in the HPLMN can further communicate with the UPF, the UDM, and the PCF in the HPLMN. The UDM in the HPLMN can further communicate with the AUSF in the HPLMN. The PCF in the HPLMN can further communicate with an AF in the HPLMN. The UPF in the HPLMN can further access a DN in the VPLMN. In FIG. 3B, "Nxx" between two network elements indicates an interface between the two network elements.

The following describes functions of some of the foregoing network elements.

An AMF network element, an AMF for short, is mainly responsible for mobility management in a mobile network, such as user location update, registration of a user with a network, and user switching.

An SMF network element, an SMF for short, is mainly responsible for session management in the mobile network, such as session establishment, modification, and release. A specific function is, for example, allocating an internet protocol (internet protocol, IP) address to the user, or selecting a UPF that provides a packet forwarding function.

A UPF network element, a UPF for short, is responsible for forwarding and receiving user data in a terminal device. The UPF network element may receive user data from a data network, and transmit the user data to the terminal device via an access network device. The UPF network element may further receive user data from the terminal device via the access network device, and forward the user data to the data network. A resource transmission and scheduling function that is used by the UPF to provide a service for the terminal device is managed and controlled by the SMF.

A PCF network element, a PCF for short, mainly supports providing a unified policy framework to control network behavior, and providing a policy rule for a control layer network function, and is responsible for obtaining user subscription information related to policy decision-making.

An NEF network element, an NEF for short, is mainly configured to support capability and event exposure.

An AF network element, an AF for short, mainly supports interacting with a 3GPP core network to provide a service, for example, affecting data routing decision-making and a policy control function, or providing some third-party services for a network side.

A UDM network element, a UDM for short, is configured to: generate an authentication credential, process a user identifier (for example, store and manage a subscription permanent identifier), control access authorization, manage subscription data, and so on.

A DN is a service network that provides a data transmission service for the user, for example, an IP multimedia service (IP multimedia service, IMS) or an internet (internet). The UE may access the DN by using a packet data unit (packet data unit, PDU) session established between the UE and the DN.

The technical solutions provided in embodiments of this application may be applied to a 5G system, for example, applied to any network architecture shown above. Alternatively, the technical solutions provided in embodiments of this application may be applied to a next-generation mobile communication system or another similar communication system. This is not specifically limited.

With reference to the accompanying drawings, the following describes a method provided in embodiments of this application. In the accompanying drawings corresponding to embodiments of this application, all steps represented by dashed lines are optional steps. In addition, in a process of describing embodiments of this application, an example in which the technical solutions in embodiments of this application are applied to a 5G system is used. Therefore, each network element is described by using a corresponding network element in the 5G system. For example, a PCF in embodiments of this application may be replaced with a policy control function network element, an SMF in embodiments of this application may be replaced with a session management function network element, a UPF in embodiments of this application may be replaced with a user plane function network element, an AF in embodiments of this application may be replaced with an application function network element, and a UDR in embodiments of this application may be replaced with a unified data repository network element. If the technical solutions provided in embodiments of this application are applied to another communication system, a name and/or a function of a network element may be changed. This is not limited herein.

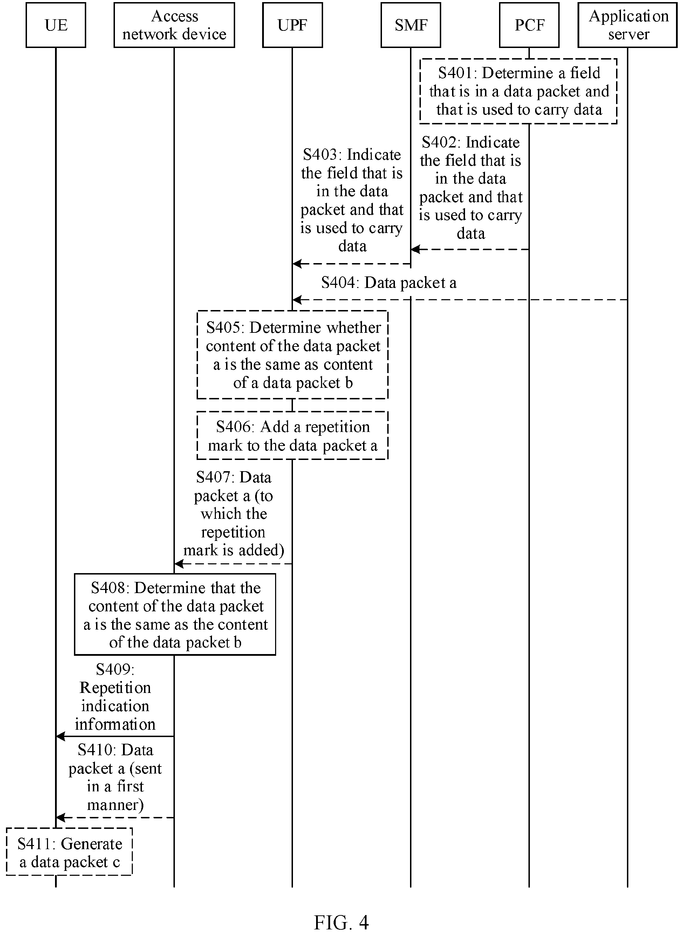

An embodiment of this application provides a first communication method. FIG. 4 is a flowchart of the method. For example, the method may be applied to the network architecture shown in FIG. 1A, FIG. 1B, FIG. 2A, FIG. 2B, FIG. 3A, or FIG. 3B.

S401: A PCF determines a field that is in a data packet and that is used to carry data. If this embodiment of this application is applied to the LBO roaming scenario shown in FIG. 2A or FIG. 2B, the PCF is, for example, the PCF in the VPLMN; or if this embodiment of this application is applied to the HR roaming scenario shown in FIG. 3A or FIG. 3B, the PCF is, for example, the PCF in the HPLMN.

For example, an AF may send first information to the PCF, where the first information may indicate the field that is in the data packet and that is used to carry data. The AF may directly send the first information to the PCF, or the AF may send the first information to an NEF, and the NEF sends the first information to a UDR. After a corresponding session is established, the PCF may obtain the first information from the UDR. A 5G system is used as an example. The session is, for example, a PDU session. In another communication system, the session may alternatively be a session of another type. In embodiments of this application, an example in which the session is the PDU session is used. If this embodiment of this application is applied to the LBO roaming scenario shown in FIG. 2A or FIG. 2B, the NEF is, for example, the NEF in the VPLMN; or if this embodiment of this application is applied to the HR roaming scenario shown in FIG. 3A or FIG. 3B, the NEF is, for example, the NEF in the HPLMN.

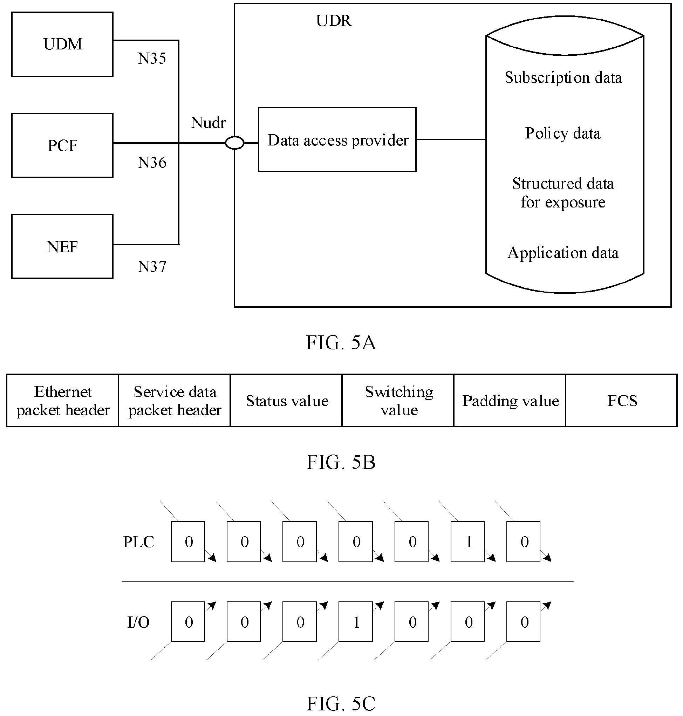

In addition, in a 5G system architecture, a UDM, a PCF, and an NEF are allowed to store data in a UDR, including at least one of UDM subscription data (subscription data), PCF subscription data (subscription data), policy data (policy data), structured data for exposure (structured data for exposure), and application data (application data) used for application detection. For details, refer to FIG. 5A. For example, the application data includes at least one of a data packet flow description (packet flow description, PFD), request information provided by the AF for a plurality of UEs, and other information. A UDR may be deployed in each PLMN. For example, a UDR that can be accessed by the NEF belongs to a same PLMN in which the NEF is located. If the UDM supports a split architecture, a UDR that can be accessed by the UDM belongs to a same PLMN in which the UDM is located. A UDR that can be accessed by the PCF belongs to a same PLMN in which the PCF is located. For example, if this embodiment of this application is applied to the LBO roaming scenario shown in FIG. 2A or FIG. 2B, the NEF is, for example, the NEF in the VPLMN, and the PCF is, for example, the PCF in the VPLMN. In this case, the NEF sends the first information to the UDR, the PCF may obtain the first information from the UDR, and the UDR may also be located in the VPLMN. For another example, if this embodiment of this application is applied to the HR roaming scenario shown in FIG. 3A or FIG. 3B, the NEF is, for example, the NEF in the HPLMN, and the PCF is, for example, the PCF in the HPLMN. In this case, the NEF sends the first information to the UDR, the PCF may obtain the first information from the UDR, and the UDR may also be located in the HPLMN.

In an industrial control scenario, for a structure of a data packet, refer to FIG. 5B. It can be learned from FIG. 5B that, the data packet may include an Ethernet packet header, a service data packet header, a status value, a switching value, a padding value, and a frame check sequence (frame check sequence, FCS). The service data packet header may include a sequence number of the data packet, to indicate a ranking of the data packet. The status value and the switching value carry specific data at a service layer. The service data packet header, the status value, and the switching value may be collectively referred to as a payload.

An Ethernet frame size is limited to 64 bytes (bytes). In an industrial scenario, the payload usually cannot reach the size. Therefore, padding is required to ensure that the Ethernet frame size reaches 64 bytes. The padding value is used to carry padding bits. The FCS is, for example, a cyclic redundancy check code. A receiving end of the data packet may check the data packet based on the FCS, to determine whether the data packet is correctly transmitted.

Usually, the status value and the switching value are changed less frequently. FIG. 5C shows an example of a data packet sent by a programmable logic controller (programmable logic controller, PLC) device and a data packet sent by an input/output (input/output, I/O) device. Each block in FIG. 5C indicates one data packet. If a block is marked with "0", it indicates that content of the data packet is not changed compared with a previous data packet. If a block is marked with "1 ", it indicates that content of the data packet is changed compared with a previous data packet. It can be learned from FIG. 5C that, in a plurality of data packets, there are not many data packets whose content is changed.

To determine whether content of two data packets is the same, one manner is to determine whether values of fields that are used to carry data and that are in the two data packets are the same. It can be learned from the foregoing descriptions that the field that is in the data packet and that is used to carry data includes a switching value (also referred to as a switching value field) and a status value (also referred to as a status value field). In addition, a service data packet header also includes a sequence number. For different data packets, sequence numbers may also be different. Therefore, in this embodiment of this application, it is considered that the field that is in the data packet and that is used to carry data may include at least one field, the at least one field includes, for example, one or more fields in the switching value, the status value, or the service data packet header; or the at least one field does not include the foregoing fields, but includes another field; or the at least one field further includes another field in addition to one or more fields in the switching value, the status value, or the service data packet header, provided that the at least one field is used to carry a part of the data packet that is different from another data packet. This is not specifically limited.

The first information indicates the field that is in the data packet and that is used to carry data. In one indication manner, the first information indicates a start location and an end location, in the data packet, of the field that is in the data packet and that is used to carry data. Alternatively, in another indication manner, the first information indicates a start location and duration, in the data packet, of the field that is in the data packet and that is used to carry data. Alternatively, in still another indication manner, the first information indicates an end location and duration, in the data packet, of the field that is in the data packet and that is used to carry data. Alternatively, there may be another indication manner. The first information needs to indicate the start location, in the data packet, of the field that is in the data packet and that is used to carry data. This may also be considered as indicating a first offset of the field in the data packet. The first information needs to indicate the end location, in the data packet, of the field that is in the data packet and that is used to carry data. This may also be considered as indicating a second offset of the field in the data packet. The first information needs to indicate the duration, in the data packet, of the field that is in the data packet and that is used to carry data. For example, the duration may be indicated by using a quantity of bits occupied by the field in the data packet.

If the field used to carry data includes only one field, for example, includes any one of the service data packet header, the switching value, or the status value, the first information may indicate a first offset and a second offset of the field in the data packet, or indicate a first offset and duration of the field in the data packet, or indicate a second offset and duration of the field in the data packet. For example, the field used to carry data includes the service data packet header, and the first information indicates a first offset and a second offset of the service data packet header in the data packet. For example, if the first offset is 2, and the second offset is 6, it indicates that the service data packet header occupies a 3^{rd} bit to a 7^{th} bit in the data packet.

Alternatively, if the field used to carry the data packet includes a plurality of fields, for example, includes three or any two of the service data packet header, the switching value, or the status value, the first information may separately indicate the plurality of fields. For example, the first information may indicate first offsets and second offsets of the plurality of fields in the data packet, or indicate first offsets and duration of the plurality of fields in the data packet, or indicate second offsets and the duration of the plurality of fields in the data packet. For example, the field used to carry data includes the service data packet header and the switching value, and the first information indicates a first offset and a second offset of the service data packet header in the data packet. For example, if the first offset of the service data packet header is 2, and the second offset is 6, it indicates that the service data packet header occupies a 3^{rd} bit to a 7^{th} bit in the data packet. The first information may further indicate a first offset and a second offset of the switching value in the data packet. For example, if the first offset of the switching value is 8 and the second offset is 12, it indicates that the switching value occupies a 9^{th} bit to a 13^{th} bit in the data packet.

If the fields used to carry data are consecutive fields in the data packet, the first information may indicate the fields in a simplified indication manner. For example, the field used to carry the data packet includes two fields (or more fields, where the two fields are used as an example), and the two fields are consecutive fields. In this case, the first information may indicate a first offset of a 1^{st} field, duration of the 1^{st} field (or a second offset of the 1^{st} field), and a second offset of a 2^{nd} field (or duration of the 2^{nd} field). That is, because the two fields are consecutive and the 2^{nd} field follows the 1^{st} field, the first information may not need to indicate a first offset of the 2^{nd} field (the duration of the 2^{nd} field or the like). For example, the field used to carry data includes the service data packet header and the switching value, and the two fields are consecutive in the data packet. The first information indicates a first offset and a second offset of the service data packet header in the data packet. For example, if the first offset of the service data packet header is 2, and the second offset is 6, it indicates that the service data packet header occupies a 3^{rd} bit to a 7^{th} bit in the data packet. The first information may further indicate a second offset of the switching value in the data packet. For example, if the second offset of the switching value is 12, it indicates that the switching value occupies a 9^{th} bit to a 13^{th} bit in the data packet.

Optionally, the first information may further indicate a type of the field and/or description information of the field. For example, if the field used to carry data includes the switching value, the first information may indicate "the switching value" + "the first offset and the second offset". In this way, a device that obtains the first information can not only determine a location, in the data packet, of the field used to carry data, but also can determine a specific field. In this embodiment of this application, during processing, a type of a field (or content of the field) may alternatively be separately processed. That is, an operation is performed only on the type of the field (or the content of the field).

Certainly, in addition to the foregoing indication manner, the first information may use another indication manner. This is not specifically limited.

S402: The PCF sends detection information to an SMF. Correspondingly, the SMF receives the detection information from the PCF. The detection information may indicate the field that is in the data packet and that is used to carry data. If this embodiment of this application is applied to the LBO roaming scenario shown in FIG. 2A or FIG. 2B, the SMF is, for example, the SMF in the VPLMN; or if this embodiment of this application is applied to the HR roaming scenario shown in FIG. 3A or FIG. 3B, the SMF is, for example, the SMF in the HPLMN.

The detection information and the first information are, for example, a same piece of information, or the detection information and the first information may be different. For example, the PCF determines the detection information based on the first information. For example, in a process of establishing the PDU session or after the PDU session is established, the PCF may send the detection information to the SMF. For example, the PCF may send the detection information by using a policy control and charging (policy control and charging, PCC) rule, to indicate a field that is in a data packet and that is used to carry data of a service data flow corresponding to the PCC rule; or the PCF may send the detection information by using PDU session related policy information (PDU session related policy information), to indicate a field that is in a data packet and that is used to carry data of the PDU session. The PDU session is, for example, a PDU session corresponding to a data packet in a first format, and the first format is a format indicated by the detection information.

Optionally, in addition to indicating the field that is in the data packet and that is used to carry data, the detection information may further include a detection indication, and the detection indication may indicate to detect the field that is in the data packet and that is used to carry data. Alternatively, the detection information may not include a detection indication. After receiving the detection information, the receiving end (for example, the SMF) may determine to detect the field that is in the data packet and that is used to carry data. Alternatively, if the entire data packet needs to be detected, the PCF may send only the detection indication, and does not need to send the detection information. After receiving the detection indication, the receiving end (for example, the SMF) may determine to detect all fields in the data packet.

S403: The SMF sends the detection information to a UPF. Correspondingly, the UPF receives the detection information from the SMF. If this embodiment of this application is applied to the LBO roaming scenario shown in FIG. 2A or FIG. 2B, the UPF is, for example, the UPF in the VPLMN; or if this embodiment of this application is applied to the HR roaming scenario shown in FIG. 3A or FIG. 3B, the UPF is, for example, the UPF in the HPLMN.

For example, the SMF may send a packet detection rule (packet detection rule, PDR) to the UPF, where the PDR may include the detection information. For another example, the SMF may send a quality of service enforcement rule (quality of service enforcement rule, QER) to the UPF, where the QER may include the detection information. Alternatively, the SMF may send the detection information to the UPF by using another message.

The UPF may determine, based on the PDR, a QoS flow to which the data packet is mapped. For example, the PDR may include packet detection information (packet detection information, PDI), and the PDI includes one or more of source interface (source interface) information, local full tunnel endpoint identifier (local full qualified tunnel endpoint ID, local F-TEDI), a UE IP address (UE IP address), a packet filter (packet filter), or other information. A packet header of the data packet may include an IP packet header or an Ethernet packet header. The UPF compares the packet header of the data packet with the information included in the PDI. If the packet header of the data packet and the information are consistent, the PDR is applicable to the data packet; or if the packet header of the data packet and the information are inconsistent, the PDR is not applicable to the data packet. An IP packet header of a data packet may include an IP 5-tuple, for example, include a source IP address (that is, an IP address of a device that sends the data packet), a source port number, a destination IP address (that is, an IP address of a device that receives the data packet), a destination port number, and a used protocol (a user datagram protocol (user datagram protocol, UDP) or a TCP) of the data packet. An Ethernet packet header of a data packet may include information such as a source/destination media access control (media access control, MAC) address and an Ethernet type (ethertype) of the data packet.

In addition, the PDR may further include an ID of the QER, so that the corresponding QER may be indexed. The QER may include an identifier of a QoS flow, for example, a QoS flow identifier (QoS flow identifier, QFI). In other words, a data packet to which the PDR is applicable is mapped by the UPF to the QoS flow corresponding to the identifier of the QoS flow included in the QER for transmission.

During implementation, the SMF may enable only one type of service data flow to be transmitted in one QoS flow (where for example, the SMF binds a corresponding PCC rule to a separate QoS flow), to reduce complexity. For example, an access network device can perform an operation at a finest granularity, that is, a QoS flow granularity.

S404: The UPF receives a data packet a. For example, if the data packet a is a downlink data packet, the data packet a may come from an application server (where the application server is used as an example in FIG. 4). The application server provides a first application, and the first application is an application corresponding to the data packet a. Alternatively, the first application provides a first service, and the data packet a corresponds to the first service. The first application (or the first service), for example, corresponds to the PDU session, and the data packet a is a data packet in the first format.

S405: The UPF determines whether content of the data packet a is the same as content of a data packet b. Alternatively, the UPF determines whether content of the data packet a is different from content of a data packet b. The data packet b is, for example, a data packet that is last sent by the UPF in the PDU session/QoS flow/service data flow, or a data packet that is sent by the UPF last time (or at a previous time) in the PDU session/QoS flow/service data flow. The data packet b also corresponds to the first application (or corresponds to the first service).

Because the UPF has received the detection information, the UPF may detect a field that is in the data packet and that is used to carry data a, to determine whether the content of the data packet a is the same as the content of the data packet b, or determine whether the content of the data packet a is different from the content of the data packet b. If the UPF determines that a value of the field that is in the data packet and that is used to carry data a is the same as a value of a field that is in the data packet and that is used to carry data b, it indicates that the content of the data packet a is the same as the content of the data packet b. If the UPF determines that a value of the field that is in the data packet and that is used to carry data a is different from a value of a field that is in the data packet and that is used to carry data b, it indicates that the content of the data packet a is different from the content of the data packet b. If the field used to carry data includes one field, the UPF only needs to determine whether values of the fields in the two data packets are the same. If the field used to carry the data includes a plurality of fields, it is considered that values of the fields used to carry data are the same only when content of the plurality of fields is the same. A value of a field may also be understood as content of the field, or may be understood as a status of the field. For example, if one field occupies three bits, "000" or "001" is a value of the field.

The UPF needs to determine whether the value of the field that is in the data packet and that is used to carry data a is the same as the value of the field that is in the data packet and that is used to carry data b, or determine whether the value of the field that is in the data packet and that is used to carry data a is different from the value of the field that is in the data packet and that is used to carry data b. In an optional manner, the UPF performs an exclusive OR operation on the value of the field that is in the data packet and that is used to carry data a and the value of the field that is in the data packet and that is used to carry data b. If a result of the exclusive OR operation is 1, it indicates that the value of the field that is in the data packet and that is used to carry data a is different from the value of the field that is in the data packet and that is used to carry data b. If a result of the exclusive OR operation is 0, it indicates that the value of the field that is in the data packet and that is used to carry data a is the same as the value of the field that is in the data packet and that is used to carry data b. Alternatively, the UPF may determine, in another manner, whether the values of the fields that are used to carry data and that are in the two data packets are the same. For example, an XNOR operation may be performed.

It should be noted that, if a field used to carry data includes a service data packet header, and the service data packet header includes a sequence number of the data packet, data packets carrying same data usually correspond to different sequence numbers. Therefore, if the field used to carry the data includes the service data packet header, the UPF does not need to require that sequence numbers included in service data packet headers are the same during detection. For example, the field used to carry data includes the service data packet header. For the data packet a and the data packet b, except sequence numbers included in service data packet headers, other content included in the fields used to carry data are the same. In this case, it is considered that the content of the data packet a is the same as the content of the data packet b. In this case, although the values of the fields used to carry data in the two data packets may not be completely the same (because the sequence numbers in the service data packet headers are different), because the sequence numbers are not compared, it may also be approximately considered that the values of the fields used to carry data in the two data packets are the same. For example, if the UPF determines, through the exclusive OR operation, whether the values of the fields that are used to carry data and that are in the two data packets are the same, the sequence numbers in the service data packet headers may not participate in the operation.

If the value of the field that is in the data packet and that is used to carry data a is different from the value of the field that is in the data packet and that is used to carry data b, a subsequent step may not need to be performed. For example, the UPF may normally send the data packet a. For example, the UPF sends the data packet a to the access network device, and then the access network device sends the data packet a to UE. Alternatively, the UPF may add a non-repetition mark to the data packet a, and then send, to the access network device, the data packet a to which the non-repetition mark is added. If the access network device determines, based on the non-repetition mark, that the content of the data packet a does not repeat content of a previous data packet, the access network device may normally send the data packet a to UE. Alternatively, if the UPF can communicate with the access network device through a service-based interface, the UPF may not need to add a non-repetition mark to the data packet a, but may send notification information to the access network device through the service-based interface. The notification information may indicate that the data packet a is a non-repeated data packet, or indicate that the content of the data packet a is different from the content of the data packet b. If the access network device determines, based on the notification information, that the content of the data packet a does not repeat content of a previous data packet, the access network device may normally send the data packet a to UE.

Alternatively, if the value of the field that is in the data packet and that is used to carry data a is the same as the value of the field that is in the data packet and that is used to carry data b, S406 may continue to be performed.

It should be noted that if the data packet a is a 1^{st} data packet of the first service, there is no previous data packet for the data packet a. Therefore, the UPF may not need to perform S405. In this case, the UPF may process the data packet a based on a case in which the content of the data packet a does not repeat content of the previous data packet. For a processing manner, refer to the foregoing descriptions.

S406: The UPF adds a repetition mark to the data packet a.

Alternatively, if the UPF can communicate with the access network device through a service-based interface, the UPF may not need to add a repetition mark to the data packet a, but send notification information to the access network device through the service-based interface. The notification information may indicate that the data packet a is a repeated data packet, or indicate that the content of the data packet a is the same as the content of the data packet b. Alternatively, the UPF may send the notification information to the SMF, and then the SMF sends the notification information to the access network device. Optionally, the UPF may further notify the access network device of a field (for example, the field used to carry data) of repeated content (where for a notification manner, refer to the foregoing content), or the access network device may obtain detection content from the SMF, where the detection content includes, for example, the field used to carry data.

Because a general packet radio service tunneling protocol (general packet radio service tunneling protocol) or an air interface protocol is used for transmission inside the 5G system, an offset of a data packet inside the 5G system may be different from that of a data packet outside the 5G system. Optionally, in embodiments of this application, the PCF, the SMF, or the access network device may maintain a mapping relationship. The mapping relationship includes, for example, a mapping relationship between field locations, for example, a mapping relationship between a field location of the data packet inside the 5G system and a field location of the data packet outside the 5G system. In this way, the access network device can also determine a field for carrying data, and may perform some special processing. For example, the access network device may generate a compressed data packet in a subsequent step.

In embodiments of this application, that a data packet is a repeated data packet means that content of the data packet is the same as that of a data packet sent last time. Similarly, that a data packet is a non-repeated data packet means that content of the data packet is different from that of a data packet sent last time.

Alternatively, if the UPF chooses to add a non-repetition mark to a non-repeated data packet (where refer to the descriptions of S405), the UPF may add no repetition mark to a repeated data packet. For the access network device, after receiving a data packet to which no mark is added, the access network device can determine that the data packet is a repeated data packet. In this case, S406 may not be performed.

S407: The UPF sends, to the access network device, the data packet a to which the repetition mark is added. Correspondingly, the access network device receives, from the UPF, the data packet a to which the repetition mark is added.

Alternatively, if the UPF adds no repetition mark to the data packet a, but sends the notification information to the access network device through the service-based interface, S407 may be replaced with the following: The UPF sends the data packet a to the access network device (where no repetition mark is added to the data packet a), and correspondingly, the access network device receives the data packet a from the UPF. Alternatively, if the UPF has sent the notification information, the UPF may not send the data packet a, and the access network device performs processing based on the notification information.

Alternatively, if the UPF adds a non-repetition mark to a non-repeated data packet, and adds no mark to a repeated data packet, S407 may be replaced with the following: The UPF sends the data packet a to the access network device (where no repetition mark is added to the data packet a), and correspondingly, the access network device receives the data packet a from the UPF.

S408: The access network device determines that the content of the data packet a is the same as the content of the data packet b.

The access network device may determine, based on the repetition mark, that the data packet a is a repeated data packet. Alternatively, if the UPF adds a non-repetition mark to a non-repeated data packet, and adds no mark to a repeated data packet, the access network device can determine that the data packet a is a repeated data packet when determining that no mark is added to the data packet a.

S409: The access network device sends repetition indication information to the UE. Correspondingly, the UE receives the repetition indication information from the access network device.

For the repeated data packet, the access network device may send the repetition indication information to the UE, where the repetition indication information may indicate that the data packet a is a repeated data packet. For example, the repetition indication information may be included in first signaling, and the first signaling is, for example, access stratum (access stratum, AS) signaling. In other words, the access network device may send the first signaling to the UE, and no longer send the data packet a. The first signaling has a smaller amount of information than the data packet a. Therefore, transmission overheads can be reduced, and a system capacity can be increased. For another example, the repetition indication information may alternatively be a compressed data packet. For example, the compressed data packet is obtained by compressing the data packet a, or the compressed data packet may be obtained by compressing another data packet. For example, a manner of compressing a data packet (for ease of description, for example, referred to as a data packet 1, where the data packet 1 is, for example, the data packet a, or may be another data packet) is as follows: A compressed data packet may only reflect that content of one or more fields is the same as content of these fields of the data packet 1, and all information of the data packet 1 may fail to be restored based only on compressed content. The receiving end (for example, the UE) may restore the data packet 1 based on content of a previous data packet of the data packet 1 and the foregoing information (for example, the compressed data packet). The compressed data packet is obtained to avoid sending the data packet a. Therefore, transmission overheads of the compressed data packet may be less than those of the data packet a. For example, usually, when a data packet is sent, a transmitting end of the data packet may also compress the data packet. For example, a payload part of the data packet may not be compressed, but only a part such as a packet header of the data packet participates in compression, to avoid a loss of valid information that is caused by the compression. In this embodiment of this application, when the compressed data packet is obtained, a compression manner different from the foregoing commonly used compression manner may be used. For example, in this embodiment of this application, when an original data packet is compressed to obtain a compressed data packet, a payload part of the original data packet may also be compressed, to minimize transmission overheads of the compressed data packet. After receiving the compressed data packet, the UE can determine a meaning of the compressed data packet based on the compression manner used by the compressed data packet. To be specific, the compressed data packet may not be a data packet actually used to transmit data, but indicates that a data packet transmitted this time is a repeated data packet. It can be learned that transmission overheads can be reduced by sending the repetition indication information, to increase a system capacity.

S410: The access network device sends the data packet a in a first manner. Transmission reliability corresponding to the first manner is low.

S409 and S410 are two optional manners, and only one of the steps needs to be performed during implementation. For example, a step to be performed may be determined by the access network device, or may be configured by a core network device (for example, the SMF), or may be specified in a protocol.

In other words, if the access network device determines that the data packet a is a repeated data packet, the access network device may continue to send the data packet a to the UE, but the access network device may reduce sending reliability of the data packet a. For example, in an implementation of the first manner, the access network device does not ensure reliability of a transmission resource scheduled for the data packet a. For example, if the access network device has an available resource and may schedule the resource for the data packet a, the data packet a may be sent; or if the access network device does not have an available resource and does not schedule a resource for the data packet a, the data packet a cannot be sent. In addition, the resource scheduled by the access network device for the data packet a may be insufficient or the resource may conflict with another resource. In this case, the data packet a may be sent, or may not be sent. It can be learned that the access network device does not ensure the reliability of the transmission resource scheduled for the data packet a. In this case, the data packet a may be sent, or may not be sent. However, in this manner, transmission overheads of the data packet a can be reduced. For another example, in another implementation of the first manner, a quantity of repeated transmissions configured by the access network device for the data packet a is less than a first threshold. The quantity of repeated transmissions of the data packet a is a quantity of times that the data packet a is repeatedly sent, and a sending success rate of the data packet a is increased by repeatedly sending the data packet a. However, in the first manner, the quantity of repeated transmissions of the data packet a is small. As a result, transmission reliability of the data packet a is low, and the data packet a may be successfully sent or may fail to be sent. However, because the quantity of repeated transmissions is small, transmission resources can also be saved. The foregoing two forms may be separately applied, or may be applied in combination. Alternatively, the first manner may have another implementation. This is not specifically limited.

It can be learned from the foregoing descriptions that, the first manner of sending the data packet a may use a smaller quantity of transmission resources than a normal manner of sending the data packet a, to help increase a system capacity. If the access network device sends the data packet a in the first manner, the UE may receive the data packet a, or may not receive the data packet a.

S411: The UE generates a data packet c.

If the access network device performs S409, the UE may perform S411. Alternatively, although the access network device performs S410, the UE does not receive the data packet a, and the UE may also perform S411. Optionally, if the UE receives no data packet within a preset time range, the UE may generate the data packet c. For example, the data packet of the first application (or the first service) is periodically sent, the UE can learn of a period of the data packet of the first application (or the first service), and the preset time range is, for example, duration of one or more periods of the data packet of the first application (or the first service). For example, if the UE should receive a data packet (that is, the data packet a) in a period but does not receive the data packet, it is considered that the data packet is not received. In this case, the preset time range is duration of one period of the data packet of the first application (or the first service).

Alternatively, if the access network device performs S410, and the UE receives the data packet a, S411 may not be performed.

Content of the data packet c is the same as the content of the data packet b. That the content is the same herein includes: Carried data is the same, and sequence numbers are also the same. It may be considered that the data packet c is a duplicate of the data packet a, and the two data packets are completely the same. For an application layer of the UE (for example, an application processor (application processor, AP) of the UE, or the first application (APP) installed in the UE), even if the content of the data packets is repeated, it needs to be ensured that the data packets are continuously received. Otherwise, if there is a data packet that is not received at the application layer of the UE, a connection between the UE and the transmitting end (for example, the application server of the first application) of the data packet may be broken. Therefore, if the UE does not receive the data packet a, because the UE can determine that the data packet a is a data packet that repeats the previous data packet, that is, the content of the data packet that is not received is the same as the content of the data packet b, the UE may generate the data packet c based on the content of the data packet b. For example, the data carried by the data packet c is the same as the data carried by the data packet b, and the sequence number of the data packet c may be adaptively changed based on the sequence number of the data packet b. For example, the sequence number of the data packet c is a value obtained by increasing the sequence number of the data packet b by 1, and the data packet a and the data packet b are two consecutive data packets. In this case, a sequence number of the data packet a is also obtained by increasing the sequence number of the data packet b by 1. Therefore, the content of the data packet c is completely the same as the content of the data packet a, and the data packet c is equivalent to the duplicate of the data packet a. For the application layer of the UE, if the data packet c is obtained, it is considered that the data packet a is received, and the connection between the UE and the application server may continue to be maintained.

Alternatively, the UE may not generate the data packet c. For example, a transport layer of the UE (for example, a modem (modem) of the UE) may send second information to the application layer of the UE, where the second information indicates that the data packet a is received, or indicates that a same data packet is received. For example, the second information includes a sequence number of the data packet a, or the second information may indicate, in another manner, that the data packet a is received. In this case, after obtaining the second information, the application layer of the UE can also determine that the data packet a is received, and the connection between the UE and the application server may continue to be maintained.

In the foregoing description process, the UPF detects whether the data packet is repeated. Alternatively, if the access network device can also determine the field that is in the data packet and that is used to carry data, the access network device may detect whether the data packet is repeated. If detection is performed by the access network device, behavior such as a detection manner is similar to that of the UPF, but the access network device does not need to be additionally notified after the detection. For content such as the detection manner of the access network device, refer to the foregoing descriptions. Details are not described again.

S401 to S407 and S410 and S411 are all optional steps.

According to the method provided in this embodiment of this application, if the content of the data packet a to be sent by the UPF is the same as the content of the data packet b sent last time, the access network device may not send the data packet a, but send the repetition indication information to the UE, and indicate, by using the repetition indication information, that the data packet a is a repeated data packet, or may reduce the transmission reliability of the data packet a. In this way, the receiving end, that is, the UE can determine the content of the data packet a (which is the same as the content of the data packet b received last time). In addition, because the data packet a does not need to be sent, or the transmission reliability of the data packet a is reduced, transmission resources can be saved, and a capacity of the 5GS can be increased.

In the embodiment shown in FIG. 4, the access network device determines a manner of processing a repeated data packet (for example, sending repetition indication information to replace the repeated data packet, or reducing transmission reliability of the repeated data packet).

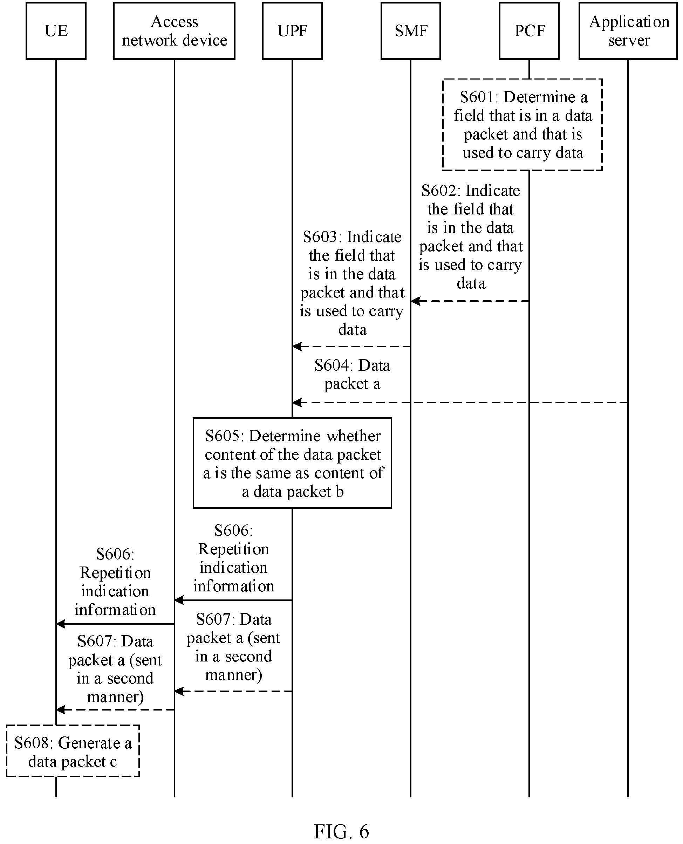

The following describes a second communication method provided in an embodiment of this application. In the method, a UPF may determine a manner of processing a repeated data packet. FIG. 6 is a flowchart of the method.

S601: A PCF determines a field that is in a data packet and that is used to carry data.

For more content of S601, refer to S401 in the embodiment shown in FIG. 4.

S602: The PCF sends detection information to an SMF. Correspondingly, the SMF receives the detection information from the PCF.

For more content of S602, refer to S402 in the embodiment shown in FIG. 4.

S603: The SMF sends the detection information to the UPF. Correspondingly, the UPF receives the detection information from the SMF.

For more content of S603, refer to S403 in the embodiment shown in FIG. 4.

S604: The UPF receives a data packet a.

For more content of S604, refer to S404 in the embodiment shown in FIG. 4.

S605: The UPF determines whether content of the data packet a is the same as content of a data packet b. Alternatively, the UPF determines whether content of the data packet a is different from content of a data packet b.

For more content of S605, refer to S405 in the embodiment shown in FIG. 4.

S606: The UPF sends repetition indication information to UE. Correspondingly, the UE receives the repetition indication information from the UPF.

For example, the UPF sends the repetition indication information to an access network device, and the access network device receives the repetition indication information from the UPF. Then, the access network device sends the repetition indication information to the UE, and the UE receives the repetition indication information from the access network device. Because the repetition indication information comes from the UPF, and the access network device is equivalent to forwarding the repetition indication information, it may also be considered that the UE receives the repetition indication information from the UPF.

In this embodiment of this application, the UPF does not need to add a marker to the data packet, but the UPF determines the manner of processing a repeated data packet, so that a process in which the UPF adds a marker to the data packet can be omitted, and a procedure of processing the data packet on a transmission path can be simplified.

For more content of S606, for example, an implementation of the repetition indication information, because the repetition indication information sent by the UPF may have a same form and same content as the repetition indication information sent by the access network device in S409 in the embodiment shown in FIG. 4, refer to S409 in the embodiment shown in FIG. 4.

S607: The UPF sends the data packet a in a second manner. Transmission reliability corresponding to the second manner is low.

S606 and S607 are two optional manners, and only one of the steps needs to be performed during implementation. For example, a step to be performed may be determined by the UPF, or may be specified in a protocol.

In other words, if the UPF determines that the data packet a is a repeated data packet, the UPF may continue to send the data packet a to the UE, but the UPF may reduce sending reliability of the data packet a. The UPF does not directly schedule an air interface resource for the data packet a. For example, the UPF sends third information to the access network device, where the third information indicates the second manner or indicates that the data packet a is a repeated data packet, and the UPF sends the data packet a to the access network device. After receiving the third information, the access network device may send the data packet a in the second manner. The second manner and the first manner in the embodiment shown in FIG. 4 may be a same manner, or may be different manners. For example, the first manner and the second manner are a same manner. For content of sending, by the access network device, the data packet a in the second manner, refer to S410 in the embodiment shown in FIG. 4. Alternatively, the second manner in which the UPF sends the data packet a may have another implementation. This is not specifically limited.

S608: The UE generates a data packet c.

For more content of S608, refer to S411 in the embodiment shown in FIG. 4.

S601 to S604 and S607 and S608 are all optional steps.

According to the method provided in this embodiment of this application, if the content of the data packet a to be sent by the UPF is the same as the content of the data packet b sent last time, the UPF may not send the data packet a, but send the repetition indication information to the UE, and indicate, by using the repetition indication information, that the data packet a is a repeated data packet, or the UPF and/or the access network device may reduce transmission reliability of the data packet a. In this way, a receiving end, that is, the UE can determine the content of the data packet a (which is the same as the content of the data packet b received last time). In addition, because the UPF and the access network device may not need to send the data packet a, or the transmission reliability of the data packet a is reduced, transmission resources can be saved, and a capacity of a 5GS can be increased. In addition, in this embodiment of this application, the UPF determines a sending manner of a repeated data packet, and the UPF does not need to add a mark or the like to the data packet, so that a procedure of processing the data packet on a transmission path can be simplified, and transmission efficiency of the data packet can be improved.

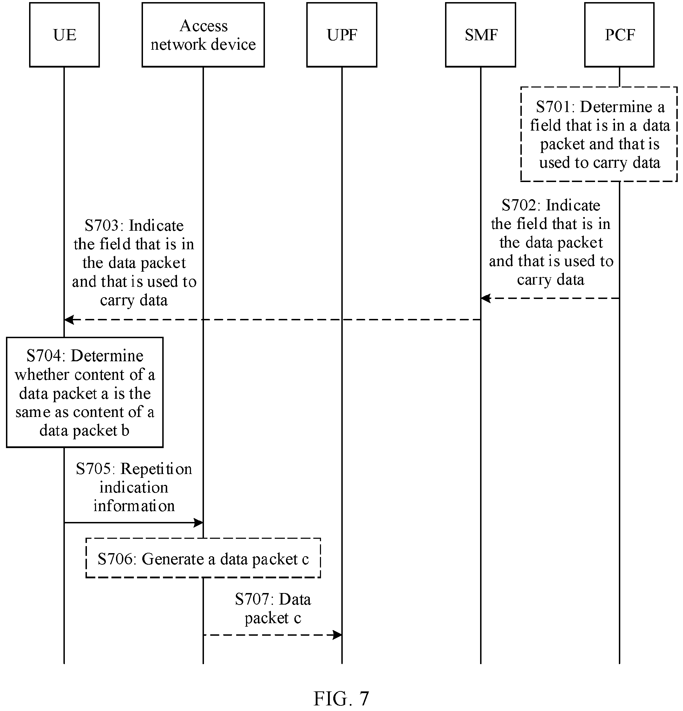

Both the embodiment shown in FIG. 4 and the embodiment shown in FIG. 6 describe downlink data packet sending processes. The following describes a third communication method provided in an embodiment of this application. The method describes an uplink data packet sending process. FIG. 7 is a flowchart of the method.

S701: A PCF determines a field that is in a data packet and that is used to carry data.

For more content of S701, refer to S401 in the embodiment shown in FIG. 4.

S702: The PCF sends detection information to an SMF. Correspondingly, the SMF receives the detection information from the PCF.

For more content of S702, refer to S402 in the embodiment shown in FIG. 4.

S703: The SMF sends the detection information to UE. Correspondingly, the UE receives the detection information from the SMF.

For example, the SMF sends a QoS rule to the UE, where the detection information may be carried in the QoS rule. Alternatively, the SMF may send the detection information to the UE in another manner. For example, the SMF sends the detection information to the UE when sending a parameter of a QoS flow to the UE.

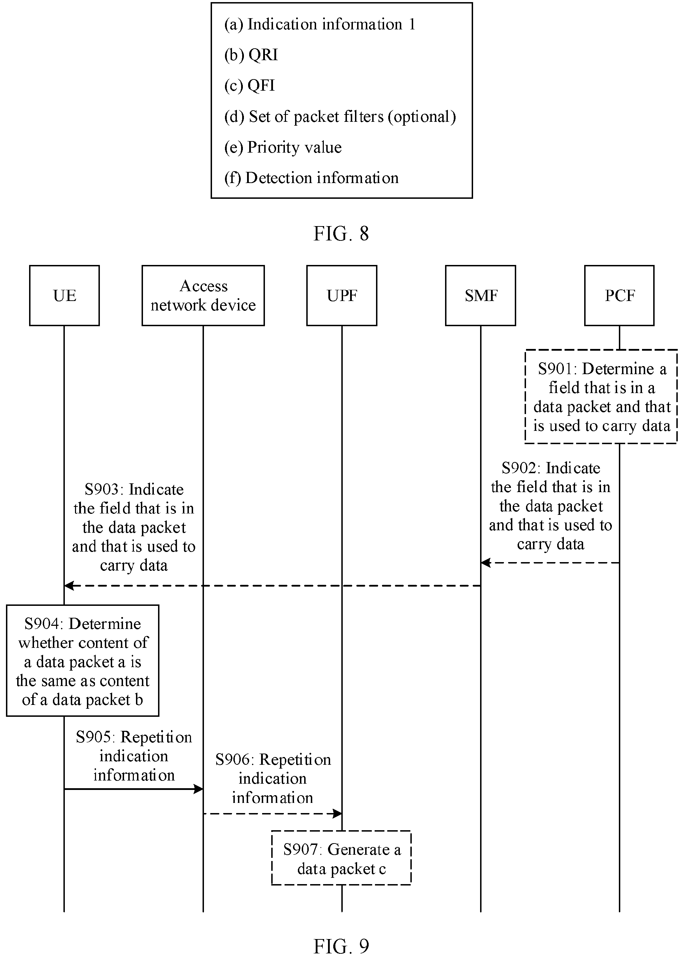

Refer to FIG. 8. The QoS rule may include a field a, a field b, a field c, a field d, and a field e. The field a may include indication information 1, and the indication information 1 may indicate whether the QoS rule is a default (default) QoS rule (an indication of whether the QoS rule is the default QoS rule). The field b may include an identifier of the QoS rule, for example, a QoS rule identifier (QoS rule identifier, QRI) of the QoS rule. The field c may include a QFI, that is, an identifier of a QoS flow corresponding to the QoS rule. The field d is an optional (optional) field, and may include a set of packet filters (a set of packet filters). For example, after receiving a data packet, the UE may match an IP 5-tuple of the data packet with the set of packet filters included in the field d, to determine whether the QoS rule is applicable to the data packet. If the IP 5-tuple of the data packet successfully matches the set of packet filters included in the field d, the QoS rule is applicable to the data packet; or if the IP 5-tuple of the data packet fails to match the set of packet filters included in the field d, the QoS rule is not applicable to the data packet. The field e includes a priority value (priority value), indicating a priority of the QoS rule. In an implementation of adding the detection information to the QoS rule, a first field may be added to the QoS rule. For example, the first field is represented as a field f, and the field f may carry the detection information. For this, still refer to FIG. 8.

S704: The UE determines whether content of a data packet a is the same as content of a data packet b. Alternatively, the UE determines whether content of a data packet a is different from content of a data packet b.

When the UE needs to send the data packet a, the UE may determine whether the content of the data packet a is the same as the content of the data packet b. Because the UE has received the detection information, the UE may detect a field that is in the data packet and that is used to carry data a, to determine whether the content of the data packet a is the same as the content of the data packet b. In this embodiment of this application, both the data packet a and the data packet b are uplink data packets. The data packet b is, for example, a data packet that is last sent by the UE in a PDU session/QoS flow/service data flow, or a data packet that is sent by the UE last time in a PDU session/QoS flow/service data flow. Both the data packet a and the data packet b correspond to a first application (or both correspond to a first service).

A mechanism used by the UE to determine whether the content of the data packet a is the same as or different from the content of the data packet b is the same as a mechanism used by a UPF to determine whether the content of the data packet a is the same as or different from the content of the data packet b. Therefore, for more content of S704, refer to S405 in the embodiment shown in FIG. 4.

S705: The UE sends repetition indication information to an access network device. Correspondingly, the access network device receives the repetition indication information from the UE.

A manner in which the UE sends the repetition indication information to the access network device is similar to a manner in which the access network device sends the repetition indication information to the UE. Therefore, for more content of S705, refer to S409 in the embodiment shown in FIG. 4.

S706: The access network device generates a data packet c. The data packet c is generated, for example, based on the data packet b. Content of the data packet c is the same as the content of the data packet a. That the content is the same herein includes: Carried data is the same, and sequence numbers are also the same. It may be considered that the data packet c is a duplicate of the data packet a, and the two data packets are completely the same.

For a receiving end (for example, an application server of the first application) of the data packet a, even if the content of the data packets is repeated, it needs to be ensured that the data packets are continuously received. Otherwise, if there is a data packet that is not received by the application server, a connection between the application server and a transmitting end (for example, the UE) of the data packet may be broken. Therefore, if the access network device does not receive the data packet a, because the access network device can determine that the data packet a is a data packet that repeats a previous data packet, that is, the content of the data packet a is the same as the content of the data packet b, the access network device may generate the data packet c based on the content of the data packet b. For example, the data carried by the data packet c is the same as the data carried by the data packet b, and the sequence number of the data packet c may be adaptively changed based on the sequence number of the data packet b. For example, the sequence number of the data packet c is a value obtained by increasing the sequence number of the data packet b by 1, and the data packet a and the data packet b are two consecutive data packets. In this case, a sequence number of the data packet a is also obtained by increasing the sequence number of the data packet b by 1. Therefore, the content of the data packet c is completely the same as the content of the data packet a, and the data packet c is equivalent to the duplicate of the data packet a. For the application server, if the data packet c is received, it is considered that the data packet a is received, and the connection between the UE and the application server may continue to be maintained.

S707: The access network device sends the data packet c to the UPF. Correspondingly, the UPF receives the data packet c from the access network device.

After generating the data packet c, the access network device may send the data packet c to the UPF. After receiving the data packet c, the UPF normally transmits the data packet c. For example, the UPF sends the data packet c to the application server. Details are not described herein.

S701 to S703 and S706 and S707 are all optional steps.

According to the method provided in this embodiment of this application, if the content of the data packet a to be sent by the UE is the same as the content of the data packet b sent last time, the UE may not send the data packet a, but send the repetition indication information to the access network device, and indicate, by using the repetition indication information, that the data packet a is a repeated data packet, or may reduce transmission reliability of the data packet a. In this way, the receiving end, that is, the access network device can determine the content of the data packet a (which is the same as the content of the data packet b received last time). In addition, because the UE does not need to send the data packet a, transmission resources can be saved, and a capacity of a 5GS can be increased.

In the embodiment shown in FIG. 7, the access network device constructs a repeated data packet. The following describes a fourth communication method provided in an embodiment of this application. An uplink transmission process is still described in the method. However, in the method, a UPF constructs a repeated data packet. FIG. 9 is a flowchart of the method.

S901: A PCF determines a field that is in a data packet and that is used to carry data.

For more content of S901, refer to S401 in the embodiment shown in FIG. 4.

S902: The PCF sends detection information to an SMF. Correspondingly, the SMF receives the detection information from the PCF.

For more content of S902, refer to S402 in the embodiment shown in FIG. 4.

S903: The SMF sends the detection information to UE. Correspondingly, the UE receives the detection information from the SMF.

For more content of S903, refer to S703 in the embodiment shown in FIG. 7.

S904: The UE determines whether content of a data packet a is the same as content of a data packet b. Alternatively, the UE determines whether content of a data packet a is different from content of a data packet b.

A mechanism used by the UE to determine whether the content of the data packet a is the same as or different from the content of the data packet b is the same as a mechanism used by the UPF to determine whether the content of the data packet a is the same as or different from the content of the data packet b. Therefore, for more content of S904, refer to S704 in the embodiment shown in FIG. 7.

S905: The UE sends repetition indication information to an access network device. Correspondingly, the access network device receives the repetition indication information from the UE.

A manner in which the UE sends the repetition indication information to the access network device is similar to a manner in which the access network device sends the repetition indication information to the UE. Therefore, for more content of S905, refer to S705 in the embodiment shown in FIG. 7.

S906: The access network device sends repetition indication information to the UPF. Correspondingly, the UPF receives the repetition indication information from the access network device. For ease of differentiation, the repetition indication information sent by the UE to the access network device is referred to as first repetition indication information, and the repetition indication information sent by the access network device to the UPF is referred to as second repetition indication information.

The first repetition indication information and the second repetition indication information are, for example, same information, and the access network device may forward, to the UPF, the repetition indication information received from the UE. Alternatively, the first repetition indication information and the second repetition indication information are different information. For example, the second repetition indication information is obtained based on the first repetition indication information. However, content indicated by the second repetition indication information is consistent with content indicated by the first repetition indication information. For this, refer to the descriptions of the embodiment shown in FIG. 4.

For example, if the UPF can communicate with the access network device through a service-based interface, the access network device may send second signaling to the UPF through the service-based interface between the access network device and the UPF, where the second signaling includes the second repetition indication information. For another example, the second repetition indication information may alternatively be a compressed data packet. For example, the compressed data packet is obtained by compressing the data packet b. For example, the compressed data packet is the first repetition indication information sent by the UE to the access network device. Alternatively, the compressed data packet may be obtained by compressing another data packet. For example, the compressed data packet is not the first repetition indication information, but is obtained by the access network device based on the first repetition indication information. For a process of obtaining the compressed data packet, refer to the descriptions of the embodiment shown in FIG. 4. After receiving the compressed data packet, the UPF can determine a meaning of the compressed data packet based on a compression manner used by the compressed data packet. To be specific, the compressed data packet is not a data packet actually used to transmit data, but indicates that a data packet transmitted this time is a repeated data packet. It can be learned that transmission overheads can be reduced by sending the repetition indication information, to increase a system capacity.

S907: The UPF generates a data packet c. Content of the data packet c is the same as the content of the data packet a. That the content is the same herein includes: Carried data is the same, and sequence numbers are also the same. It may be considered that the data packet c is a duplicate of the data packet a, and the two data packets are completely the same.

After generating the data packet c, the UPF normally transmits the data packet c. For example, the UPF sends the data packet c to an application server. Details are not described herein.

A manner in which the UPF generates the data packet c is similar to a manner in which the access network device generates the data packet c. Therefore, for more content of S907, for example, content such as how the UPF generates the data packet c, refer to S706 in the embodiment shown in FIG. 7.

S901 to S903 and S906 and S907 are all optional steps.

According to the method provided in this embodiment of this application, if the content of the data packet a to be sent by the UE is the same as the content of the data packet b sent last time, the UE may not send the data packet a, but send the repetition indication information to the UPF via the access network device, and indicate, by using the repetition indication information, that the data packet a is a repeated data packet. In this way, a receiving end can determine the content of the data packet a (which is the same as the content of the data packet b received last time). In addition, because the data packet a does not need to be sent, or transmission reliability of the data packet a is reduced, transmission resources can be saved, and a capacity of a 5GS can be increased. In the embodiment shown in FIG. 7, the access network device constructs a repeated data packet. In the embodiment shown in FIG. 9, the UPF constructs a repeated data packet. In other words, a network element that constructs a repeated data packet is not limited, and a manner is flexible.

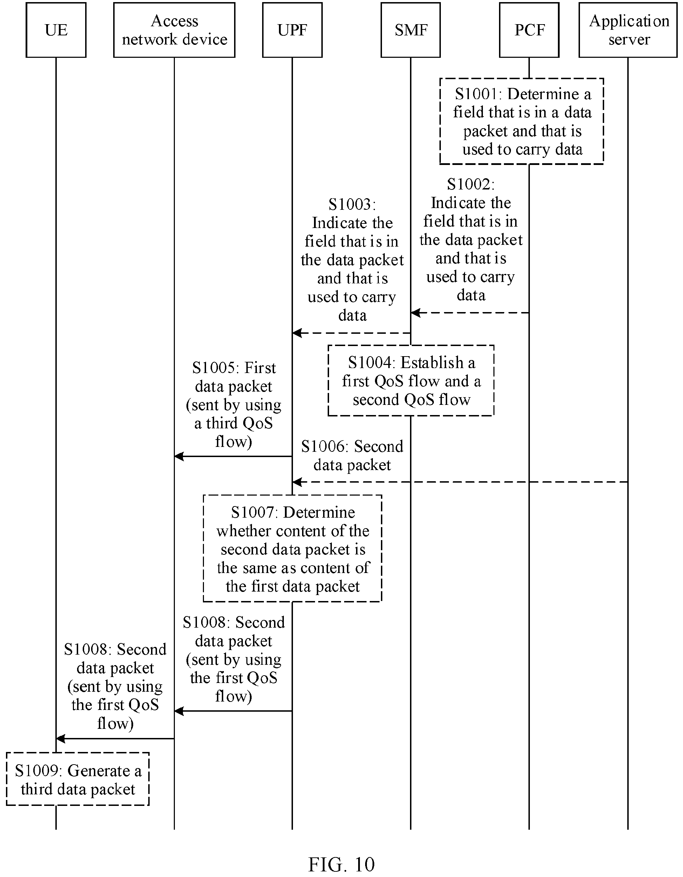

In the foregoing embodiments, transmission overheads of a repeated data packet are reduced by sending repetition indication information. In addition, an embodiment of this application proposes that transmission overheads of a repeated data packet may be reduced in another manner. For example, a repeated data packet and a non-repeated data packet are sent by using different QoS flows, parameters of the different QoS flows are different, and occupied resources are also different. Therefore, transmission overheads of the repeated data packet can also be reduced. The following describes a fifth communication method provided in an embodiment of this application. The method is used to describe this manner of reducing the transmission overheads. FIG. 10 is a flowchart of the method. A downlink transmission process is used as an example in the embodiment shown in FIG. 10.

S1001: A PCF determines a field that is in a data packet and that is used to carry data.

For more content of S1001, refer to S401 in the embodiment shown in FIG. 4.

S1002: The PCF sends detection information to an SMF. Correspondingly, the SMF receives the detection information from the PCF.

For more content of S 1002, refer to S402 in the embodiment shown in FIG. 4.

S1003: The SMF sends the detection information to a UPF. Correspondingly, the UPF receives the detection information from the SMF.

For more content of S 1003, refer to S403 in the embodiment shown in FIG. 4.

S1004: The SMF establishes a first QoS flow and a second QoS flow. Both the first QoS flow and the second QoS flow correspond to a first session, and the first session is, for example, the PDU session in the embodiment shown in FIG. 4. S1003 may be performed before S1004, or S1003 may be performed after S1004, or S1003 and S1004 may be performed at the same time.

The first QoS flow and the second QoS flow may have at least one different parameter, and/or the first QoS flow and the second QoS flow may have at least one different parameter value. For example, the first QoS flow may be used to transmit a data packet whose content is different from content of a data packet sent last time, and the second QoS flow may be used to transmit a data packet whose content is the same as content of a data packet sent last time. For example, reliability of the second QoS flow is lower than reliability of the first QoS flow. For example, the second QoS flow is a non-guaranteed bit rate (non-guaranteed bit rate, non-GBR) QoS flow, and the first QoS flow is a GBR QoS flow. Certainly, that different reliability of the QoS flows is reflected by using GBRs is only an example, but the different reliability may alternatively be reflected by using another parameter. The another parameter is, for example, a packet error rate (packet error rate, PER). For example, a high PER of a QoS flow indicates low reliability of the QoS flow; or a low PER of a QoS flow indicates high reliability of the QoS flow.

In other words, the SMF may establish two QoS flows, and a repeated data packet may be transmitted by using a QoS flow with lower reliability. In this way, a quantity of transmission resources occupied by the repeated data packet can be minimized, to increase a system capacity. Non-repeated data packets may be transmitted by using a QoS flow with higher reliability, to improve a transmission success rate of these data packets.

The SMF may establish the first QoS flow and the second QoS flow at the same time. Alternatively, the SMF may first establish one QoS flow, and temporarily does not establish the other QoS flow. For example, in this embodiment of this application, if the SMF first establishes the second QoS flow, and temporarily does not establish the first QoS flow, a data packet of a first application (or a first service) may be first transmitted between the UPF and UE by using the second QoS flow. If the second QoS flow is first established, for a 1^{st} data packet of the first service, there is no previous data packet, and the data packet should be transmitted by using the first QoS flow. However, because currently only the second QoS flow is established, the data packet is transmitted by using the second QoS flow. In other words, if the second QoS flow is first established, the second QoS flow may be used to transmit the 1^{st} data packet of the first service and transmit a data packet whose content is the same as content of a data packet sent last time.

S1005: The UPF sends a first data packet by using a third QoS flow.

If the first data packet is the 1^{st} data packet of the first service, the third QoS flow is, for example, the second QoS flow. Alternatively, if the SMF establishes two QoS flows at the same time in S1004, a QoS flow to be used to transmit the 1^{st} data packet of the first service may be preconfigured. For example, when the first QoS flow is preconfigured to transmit the 1^{st} data packet of the first service, if the first data packet is the 1^{st} data packet of the first service, the third QoS flow is the first QoS flow; or when the second QoS flow is preconfigured to transmit the 1^{st} data packet of the first service, if the first data packet is the 1^{st} data packet of the first service, the third QoS flow is the second QoS flow.

If the first data packet is a subsequent data packet of the first service, the third QoS flow is, for example, the first QoS flow or the second QoS flow. A specific QoS flow depends on whether content of the first data packet is the same as that of a previous data packet of the first data packet.

S1006: The UPF receives a second data packet. For example, if the second data packet is a downlink data packet, the second data packet may come from an application server (where the application server is used as an example in FIG. 10). The application server provides the first application, and the first application is an application corresponding to the second data packet. Alternatively, the first application provides the first service, and the second data packet corresponds to the first service. The first application (or the first service), for example, corresponds to the PDU session, and the second data packet is a data packet in a first format.

S1007: The UPF determines whether content of the second data packet is the same as the content of the first data packet. Alternatively, the UPF determines whether content of the second data packet is different from the content of the first data packet. For example, the first data packet is, for example, a data packet that is last sent by the UPF in the PDU session/a QoS flow/a service data flow, or a data packet that is sent by the UPF last time (or at a previous time) in the PDU session/a QoS flow/a service data flow. The first data packet also corresponds to the first application (or corresponds to the first service).

If the SMF establishes the first QoS flow and the second QoS flow in S1004, and the UPF determines that the content of the second data packet is different from the content of the first data packet, the UPF may continue to perform S1008 below after performing S1007.

Alternatively, if the SMF establishes the second QoS flow in S1004, but does not establish the first QoS flow, if the content of the second data packet is different from the content of the first data packet, the UPF may send first indication information to the SMF, where the first indication information may indicate that content of data packets is different, or the first indication information may indicate that the content of the second data packet is different from the content of the first data packet, or the first indication information indicates to establish the first QoS flow. After receiving the first indication information, the SMF may establish the first QoS flow based on the first indication information. After establishing the first QoS flow, the SMF may further send second indication information to the UPF, where the second indication information may indicate that the first QoS flow has been established. Optionally, in an indication manner in which the second indication information indicates that the first QoS flow has been established, the second indication information includes a QFI of the first QoS flow. After receiving the second indication information, the UPF may continue to perform S1008 below. In a manner in which the SMF establishes the first QoS flow based on the first indication information, if there is no data packet with different content in data packets corresponding to the first application (or the first service), the SMF may not need to establish the first QoS flow, so that overheads caused by establishing a QoS flow can be reduced, and a communication procedure can be simplified.

For more content of S1007, refer to S405 in the embodiment shown in FIG. 4.

S1008: The UPF sends the second data packet by using the first QoS flow. An example in which the content of the second data packet is different from the content of the first data packet is used. If the content of the second data packet is the same as the content of the first data packet, the UPF may send the second data packet by using the second QoS flow. If the reliability of the second QoS flow is low, when the UPF sends the second data packet by using the second QoS flow, the UE may receive the second data packet, or may not receive the second data packet.

S1009: The UE generates a third data packet.

If the UE receives the second data packet, S1009 does not need to be performed. If the UE does not receive the second data packet, S1009 may be performed. Optionally, if the UE receives no data packet within a preset time range, the UE may generate the third data packet. For example, the data packet of the first application (or the first service) is periodically sent, the UE can learn of a period of the data packet of the first application (or the first service), and the preset time range is, for example, duration of one or more periods of the data packet of the first application (or the first service). For example, if the UE should receive a data packet (that is, the second data packet) in a period but does not receive the data packet, it is considered that the data packet is not received. In this case, the preset time range is duration of one period of the data packet of the first application (or the first service).

For more content of S1009, refer to S411 in the embodiment shown in FIG. 4.

S1001 to S1004, S1006 and S1007, and S1009 are all optional steps.

For example, the first service corresponds to five data packets: data packets 1 to 5, and the data packet 1 is a 1^{st} data packet corresponding to the first service. Content of the data packet 2 is the same as content of the data packet 1, content of the data packet 3 is different from the content of the data packet 2, content of the data packet 4 is different from the content of the data packet 3, and content of the data packet 5 is different from the content of the data packet 4. For example, if the SMF first establishes the second QoS flow, for a QoS flow that corresponds to each data packet and that is determined by the UPF, refer to Table 1.

**Table 1**

| Sequence number of a current data packet | Sequence number of a previous data packet | QoS flow of the current data packet |
|---|---|---|
| 1 | | 2 |
| 2 | 1 (same content) | 2 |
| 3 | 2 (different content) | 1 |
| 4 | 3 (different content) | 1 |
| 5 | 4 (different content) | 1 |

In a second column in Table 1, "same content" means that content of a current data packet in the row is the same as content of a previous data packet, and "different content" means that content of a current data packet in the row is different from content of a previous data packet. In a last column, "1" indicates the QFI of the first QoS flow, and "2" indicates a QFI of the second QoS flow. For example, for the data packet 1, there is no previous data packet. Because the SMF temporarily establishes only the second QoS flow, and does not establish the first QoS flow, the data packet 1 is transmitted by using the second QoS flow (where the QFI is 2). For another example, for the data packet 2, a previous data packet is the data packet 1, and the content of the data packet 2 is the same as that of the data packet 1. Therefore, the data packet 2 continues to be transmitted by using the second QoS flow. For still another example, for the data packet 3, a previous data packet is the data packet 2, and the content of the data packet 3 is different from that of the data packet 2. In this case, the data packet 3 may be transmitted by using the first QoS flow (where the QFI is 1). Optionally, before transmitting the data packet 3 by using the first QoS flow, the UPF may send the first indication information to the SMF, and the SMF establishes the first QoS flow based on the first indication information. Then, the UPF transmits the data packet 3 by using the first QoS flow. A sending process of another data packet is similar to this. In other words, in this example, the first QoS flow is used to transmit data packets whose content is different from that of previous data packets: the data packets 3, 4, and 5, and the second QoS flow is used to transmit the 1^{st} data packet and a data packet whose content is the same as that of a previous data packet: the data packets 1 and 2.

According to the method provided in this embodiment of this application, a repeated data packet and a non-repeated data packet can be transmitted on different QoS flows, and all data packets do not need to be transmitted by using a QoS flow with high reliability. Therefore, a large quantity of transmission resources do not need to be consumed for each data packet, to help increase a system capacity.

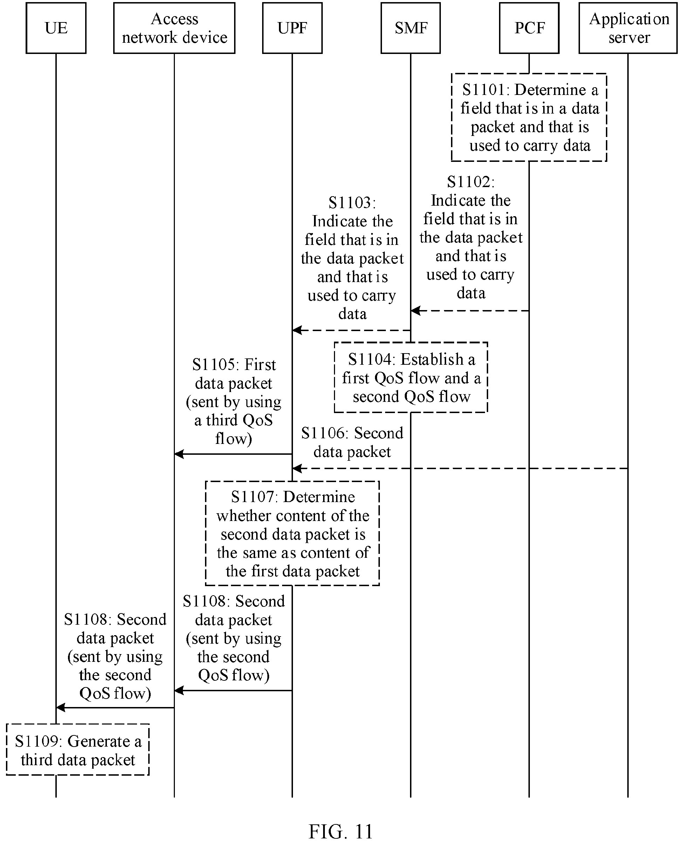

In the embodiment shown in FIG. 10, the SMF first establishes the second QoS flow. The SMF may first establish the first QoS flow. The following describes a sixth communication method provided in an embodiment of this application. In the method, an SMF may first establish a QoS flow, and the QoS flow is a first QoS flow. FIG. 11 is a flowchart of the method. A downlink transmission process is still used as an example in the embodiment shown in FIG. 11.

S1101: A PCF determines a field that is in a data packet and that is used to carry data.

For more content of S1101, refer to S401 in the embodiment shown in FIG. 4.

S1102: The PCF sends detection information to the SMF. Correspondingly, the SMF receives the detection information from the PCF.

For more content of S1102, refer to S402 in the embodiment shown in FIG. 4.

S1103: The SMF sends the detection information to a UPF. Correspondingly, the UPF receives the detection information from the SMF.

For more content of S1103, refer to S403 in the embodiment shown in FIG. 4.

S1104: The SMF establishes the first QoS flow and a second QoS flow. Both the first QoS flow and the second QoS flow correspond to a first session, and the first session is, for example, the PDU session in the embodiment shown in FIG. 4. S1103 may be performed before S1104, or S1103 may be performed after S1104, or S1103 and S1104 may be performed at the same time.

The SMF may establish the first QoS flow and the second QoS flow at the same time. Alternatively, the SMF may first establish one QoS flow, and temporarily does not establish the other QoS flow. For example, in this embodiment of this application, the SMF first establishes the first QoS flow, and temporarily does not establish the second QoS flow. In this case, the UPF and UE may first transmit a 1^{st} data packet of a first application (or a first service) by using the first QoS flow.

For more content of S1104, refer to S1004 in the embodiment shown in FIG. 10.

S1105: The UPF sends a first data packet by using a third QoS flow.

If the first data packet is the 1^{st} data packet of the first service, the third QoS flow is, for example, the first QoS flow. Alternatively, if the SMF establishes two QoS flows at the same time in S1104, a QoS flow to be used to transmit the 1^{st} data packet of the first service may be preconfigured. For example, when the first QoS flow is preconfigured to transmit the 1^{st} data packet of the first service, if the first data packet is the 1^{st} data packet of the first service, the third QoS flow is the first QoS flow; or when the second QoS flow is preconfigured to transmit the 1^{st} data packet of the first service, if the first data packet is the 1^{st} data packet of the first service, the third QoS flow is the second QoS flow.

If the first data packet is a subsequent data packet of the first service, the third QoS flow is, for example, the first QoS flow or the second QoS flow. A specific QoS flow depends on whether content of the first data packet is the same as that of a previous data packet of the first data packet.

S1106: The UPF receives a second data packet. For example, if the second data packet is a downlink data packet, the second data packet may come from an application server. The application server provides the first application, and the first application is an application corresponding to the second data packet. Alternatively, the first application provides the first service, and the second data packet corresponds to the first service. The first application (or the first service), for example, corresponds to the PDU session, and the second data packet is a data packet in a first format.

S1107: The UPF determines whether content of the second data packet is the same as the content of the first data packet. Alternatively, the UPF determines whether content of the second data packet is different from the content of the first data packet. For example, the first data packet is, for example, a data packet that is last sent by the UPF in the PDU session/a QoS flow/a service data flow, or a data packet that is sent by the UPF last time (or at a previous time) in the PDU session/a QoS flow/a service data flow. The first data packet also corresponds to the first application (or corresponds to the first service).

If the SMF establishes the first QoS flow and the second QoS flow in S1104, and the UPF determines that the content of the second data packet is the same as the content of the first data packet, the UPF may continue to perform S1108 below after performing S1107.

Alternatively, if the SMF establishes the first QoS flow in S1104, but does not establish the second QoS flow, if the content of the second data packet is the same as the content of the first data packet, the UPF may send first indication information to the SMF, where the first indication information may indicate that content of data packets is the same, or the first indication information may indicate that the content of the second data packet is the same as the content of the first data packet, or the first indication information indicates to establish the second QoS flow. After receiving the first indication information, the SMF may establish the second QoS flow based on the first indication information. After establishing the second QoS flow, the SMF may further send second indication information to the UPF, where the second indication information may indicate that the second QoS flow has been established. Optionally, in an indication manner in which the second indication information indicates that the second QoS flow has been established, the second indication information includes a QFI of the second QoS flow. After receiving the second indication information, the UPF may continue to perform S1108 below. In a manner in which the SMF establishes the second QoS flow based on the first indication information, if there is no data packet with same content in data packets corresponding to the first application (or the first service), the SMF may not need to establish the second QoS flow, so that overheads caused by establishing a QoS flow can be reduced, and a communication procedure can be simplified.

For more content of S1107, refer to S405 in the embodiment shown in FIG. 4.

S1108: The UPF sends the second data packet by using the second QoS flow. An example in which the content of the second data packet is the same as the content of the first data packet is used herein. Because reliability of the second QoS flow is low, when the UPF sends the second data packet by using the second QoS flow, the UE may receive the second data packet, or may not receive the second data packet. Alternatively, if the content of the second data packet is different from the content of the first data packet, the UPF may send the second data packet by using the first QoS flow.

S1109: The UE generates a third data packet.

If the UE receives the second data packet, S1109 does not need to be performed. If the UE does not receive the second data packet, S1109 may be performed. Optionally, if the UE receives no data packet within a preset time range, the UE may generate the third data packet. For example, the data packet of the first application (or the first service) is periodically sent, the UE can learn of a period of the data packet of the first application (or the first service), and the preset time range is, for example, duration of one or more periods of the data packet of the first application (or the first service). For example, if the UE should receive a data packet (that is, the second data packet) in a period but does not receive the data packet, it is considered that the data packet is not received. In this case, the preset time range is duration of one period of the data packet of the first application (or the first service).

For more content of S1109, refer to S411 in the embodiment shown in FIG. 4.

S1101 to S1104, S1106 and S1107, and S1109 are all optional steps.

For example, the first service corresponds to five data packets: data packets 1 to 5, and the data packet 1 is a 1^{st} data packet corresponding to the first service. Content of the data packet 2 is the same as content of the data packet 1, content of the data packet 3 is different from the content of the data packet 2, content of the data packet 4 is different from the content of the data packet 3, and content of the data packet 5 is different from the content of the data packet 4. For example, if the SMF first establishes the first QoS flow, for a QoS flow that corresponds to each data packet and that is determined by the UPF, refer to Table 2.

**Table 2**

| Sequence number of a current data packet | Sequence number of a previous data packet | QoS flow of the current data packet |
|---|---|---|
| 1 | | 1 |
| 2 | 1 (same content) | 2 |
| 3 | 2 (different content) | 1 |
| 4 | 3 (different content) | 1 |
| 5 | 4 (different content) | 1 |

In a second column in Table 2, "same content" means that content of a current data packet in the row is the same as content of a previous data packet, and "different content" means that content of a current data packet in the row is different from content of a previous data packet. In a last column, "1" indicates the QFI of the first QoS flow, and "2" indicates a QFI of the second QoS flow. For example, for the data packet 1, there is no previous data packet. Because the SMF temporarily establishes only the first QoS flow, and does not establish the second QoS flow, the data packet 1 is transmitted by using the first QoS flow (where the QFI is 1). For another example, for the data packet 2, if a previous data packet is the data packet 1, and the content of the data packet 2 is the same as that of the data packet 1, the data packet 2 may be transmitted by using the second QoS flow (where the QFI is 2). Optionally, before transmitting the data packet 2 by using the second QoS flow, the UPF may send the first indication information to the SMF, and the SMF establishes the second QoS flow based on the first indication information. Then, the UPF transmits the data packet 2 by using the second QoS flow. For still another example, for the data packet 3, a previous data packet is the data packet 2, and the content of the data packet 3 is different from that of the data packet 2. Therefore, the data packet 2 is transmitted by using the first QoS flow. A sending process of another data packet is similar to this. In other words, in this example, the first QoS flow is used to transmit the 1^{st} data packet and data packets whose content is different from that of previous data packets: the data packets 1, 3, 4, and 5; and the second QoS flow is used to transmit a data packet whose content is the same as that of a previous data packet: the data packet 2.

According to the method provided in this embodiment of this application, a repeated data packet and a non-repeated data packet can be transmitted on different QoS flows, and all data packets do not need to be transmitted by using a QoS flow with high reliability. Therefore, a large quantity of transmission resources do not need to be consumed for each data packet, to help increase a system capacity.

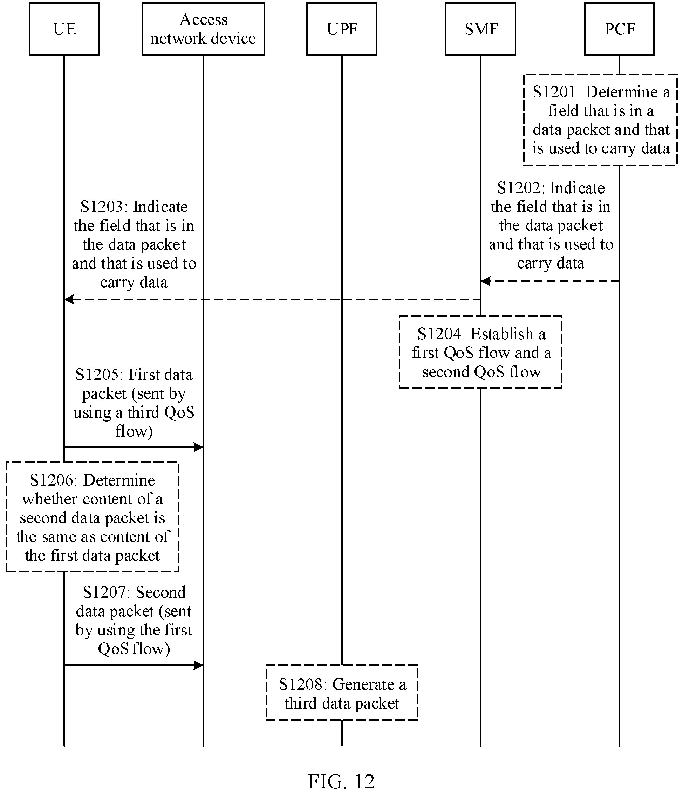

Both the embodiment shown in FIG. 10 and the embodiment shown in FIG. 11 describe the downlink transmission processes. The following describes a seventh communication method provided in an embodiment of this application. The method describes an uplink transmission process. FIG. 12 is a flowchart of the method.

S1201: A PCF determines a field that is in a data packet and that is used to carry data.

For more content of S1201, refer to S401 in the embodiment shown in FIG. 4.

S1202: The PCF sends detection information to an SMF. Correspondingly, the SMF receives the detection information from the PCF.

For more content of S1202, refer to S402 in the embodiment shown in FIG. 4.

S1203: The SMF sends the detection information to UE. Correspondingly, the UE receives the detection information from the SMF.

For more content of S1203, refer to S703 in the embodiment shown in FIG. 7.

S1204: The SMF establishes a first QoS flow and a second QoS flow.

For more content of S1204, refer to S1004 in the embodiment shown in FIG. 10.

S1205: The UE sends a first data packet by using a third QoS flow.

If the first data packet is a 1^{st} data packet of a first service, the third QoS flow is, for example, the second QoS flow. Alternatively, if the SMF establishes two QoS flows at the same time in S1204, a QoS flow to be used to transmit the 1^{st} data packet of the first service may be preconfigured. For example, when the first QoS flow is preconfigured to transmit the 1^{st} data packet of the first service, if the first data packet is the 1^{st} data packet of the first service, the third QoS flow is the first QoS flow; or when the second QoS flow is preconfigured to transmit the 1^{st} data packet of the first service, if the first data packet is the 1^{st} data packet of the first service, the third QoS flow is the second QoS flow.

If the first data packet is a subsequent data packet of the first service, the third QoS flow is, for example, the first QoS flow or the second QoS flow. A specific QoS flow depends on whether content of the first data packet is the same as that of a previous data packet of the first data packet.

S1206: The UE determines whether content of a second data packet is the same as the content of the first data packet. Alternatively, the UE determines whether content of a second data packet is different from the content of the first data packet.

When the UE needs to send the second data packet, the UE may determine whether the content of the second data packet is the same as or different from the content of the first data packet. If the SMF establishes the first QoS flow and the second QoS flow in S1204, and the UE determines that the content of the second data packet is different from the content of the first data packet, the UE may continue to perform S1207 below after performing S1206.

A mechanism used by the UE to determine whether the content of the second data packet is the same as or different from the content of the first data packet is the same as a mechanism used by a UPF to determine whether content of a data packet a is the same as or different from content of a data packet b. Therefore, for more content of S1206, refer to S1006 in the embodiment shown in FIG. 10.

S1207: The UE sends the second data packet by using the first QoS flow. An example in which the content of the second data packet is different from the content of the first data packet is used. If the content of the second data packet is the same as the content of the first data packet, the UE may send the second data packet by using the second QoS flow. If reliability of the second QoS flow is low, when the UE sends the second data packet by using the second QoS flow, an access network device may receive the second data packet, or may not receive the second data packet. If the access network device can receive the second data packet, the access network device may send the second data packet to the UPF, and the UPF can also receive the second data packet. If the access network device cannot receive the second data packet, the UPF cannot receive the second data packet either.

S1208: The UPF generates a third data packet.

If the UPF receives the second data packet, S1208 does not need to be performed. If the UPF determines that the second data packet is not received, S1208 may be performed. Optionally, if the UPF receives no data packet within a preset time range, the UE may generate the third data packet. For example, a data packet of a first application (or the first service) is periodically sent, the UE can learn of a period of the data packet of the first application (or the first service), and the preset time range is, for example, duration of one or more periods of the data packet of the first application (or the first service). For example, if the UPF should receive a data packet (that is, the second data packet) in a period but does not receive the data packet, it is considered that the data packet is not received. In this case, the preset time range is duration of one period of the data packet of the first application (or the first service).

A manner in which the UPF generates the third data packet is similar to a manner in which the UE generates a data packet c. Therefore, for more content of S1208, refer to S411 in the embodiment shown in FIG. 4.

S1201 to S1204, S1206, and S1208 are all optional steps.

According to the method provided in this embodiment of this application, a repeated data packet and a non-repeated data packet can be transmitted on different QoS flows, and all data packets do not need to be transmitted by using a QoS flow with high reliability. Therefore, a large quantity of transmission resources do not need to be consumed for each data packet, to help increase a system capacity.

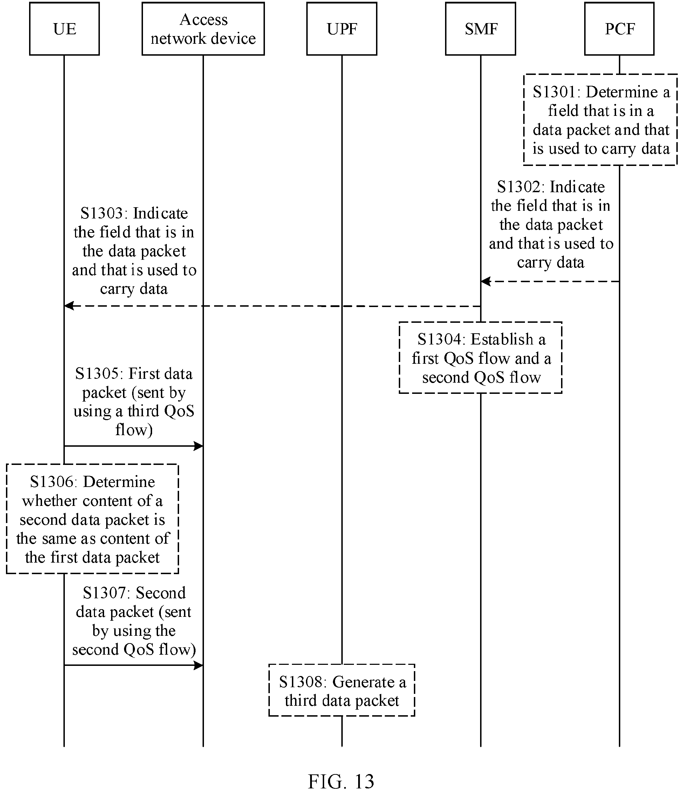

The following describes an eighth communication method provided in an embodiment of this application. An uplink transmission process is also described in the method. FIG. 13 is a flowchart of the method.

S1301: A PCF determines a field that is in a data packet and that is used to carry data.

For more content of S1301, refer to S401 in the embodiment shown in FIG. 4.

S1302: The PCF sends detection information to an SMF. Correspondingly, the SMF receives the detection information from the PCF.

For more content of S1302, refer to S402 in the embodiment shown in FIG. 4.

S1303: The SMF sends the detection information to UE. Correspondingly, the UE receives the detection information from the SMF.

For more content of S1303, refer to S703 in the embodiment shown in FIG. 7.

S1304: The SMF establishes a first QoS flow and a second QoS flow.

For more content of S1304, refer to S1104 in the embodiment shown in FIG. 11.

S1305: The UE sends a first data packet by using a third QoS flow.

If the first data packet is a 1^{st} data packet of a first service, the third QoS flow is, for example, the first QoS flow. Alternatively, if the SMF establishes two QoS flows at the same time in S1304, a QoS flow to be used to transmit the 1^{st} data packet of the first service may be preconfigured. For example, when the first QoS flow is preconfigured to transmit the 1^{st} data packet of the first service, if the first data packet is the 1^{st} data packet of the first service, the third QoS flow is the first QoS flow; or when the second QoS flow is preconfigured to transmit the 1^{st} data packet of the first service, if the first data packet is the 1^{st} data packet of the first service, the third QoS flow is the second QoS flow.

If the first data packet is a subsequent data packet of the first service, the third QoS flow is, for example, the first QoS flow or the second QoS flow. A specific QoS flow depends on whether content of the first data packet is the same as that of a previous data packet of the first data packet.

S1306: The UE determines whether content of a second data packet is the same as the content of the first data packet. Alternatively, the UE determines whether content of a second data packet is different from the content of the first data packet.

When the UE needs to send the second data packet, the UE may determine whether the content of the second data packet is the same as or different from the content of the first data packet. If the SMF establishes the first QoS flow and the second QoS flow in S1304, and the UE determines that the content of the second data packet is the same as the content of the first data packet, the UE may continue to perform S1307 below after performing S1306.

A mechanism used by the UE to determine whether the content of the second data packet is the same as or different from the content of the first data packet is the same as a mechanism used by a UPF to determine whether content of a data packet a is the same as or different from content of a data packet b. Therefore, for more content of S1306, refer to S1106 in the embodiment shown in FIG. 11.

S1307: The UE sends the second data packet by using the second QoS flow. An example in which the content of the second data packet is the same as the content of the first data packet is used herein. If reliability of the second QoS flow is low, when the UE sends the second data packet by using the second QoS flow, an access network device may receive the second data packet, or may not receive the second data packet. If the access network device can receive the second data packet, the access network device may send the second data packet to the UPF, and the UPF can also receive the second data packet. If the access network device cannot receive the second data packet, the UPF cannot receive the second data packet either. Alternatively, if the content of the second data packet is different from the content of the first data packet, the UE may send the second data packet by using the first QoS flow.

S1308: The UPF generates a third data packet.

If the UPF receives the second data packet, S1308 does not need to be performed. If the UPF determines that the second data packet is not received, S1308 may be performed. Optionally, if the UPF receives no data packet within a preset time range, the UE may generate the third data packet. For example, a data packet of a first application (or the first service) is periodically sent, the UE can learn of a period of the data packet of the first application (or the first service), and the preset time range is, for example, duration of one or more periods of the data packet of the first application (or the first service). For example, if the UPF should receive a data packet (that is, the second data packet) in a period but does not receive the data packet, it is considered that the data packet is not received. In this case, the preset time range is duration of one period of the data packet of the first application (or the first service).

A manner in which the UPF generates the third data packet is similar to a manner in which the UE generates a data packet c. Therefore, for more content of S1308, refer to S411 in the embodiment shown in FIG. 4.

S1301 to S1304, S1306, and S1308 are all optional steps.

According to the method provided in this embodiment of this application, a repeated data packet and a non-repeated data packet can be transmitted on different QoS flows, and all data packets do not need to be transmitted by using a QoS flow with high reliability. Therefore, a large quantity of transmission resources do not need to be consumed for each data packet, to help increase a system capacity.

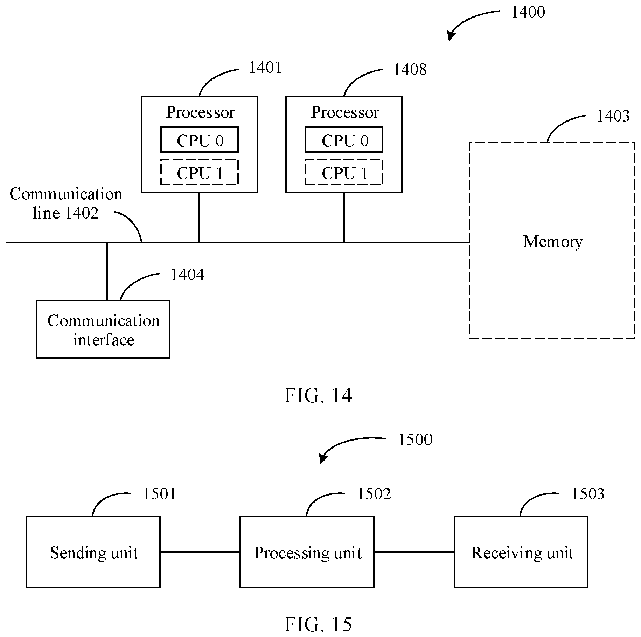

FIG. 14 provides a schematic diagram of a structure of a communication apparatus according to an embodiment of this application. The communication apparatus 1400 may be the terminal device or a circuit system of the terminal device in any one of the embodiment shown in FIG. 4, the embodiment shown in FIG. 6, the embodiment shown in FIG. 7, and the embodiment shown in FIG. 9 to the embodiment shown in FIG. 13, and is configured to implement a method corresponding to the terminal device in the foregoing method embodiments. Alternatively, the communication apparatus 1400 may be the network device or a circuit system of the network device in any one of the embodiment shown in FIG. 4, the embodiment shown in FIG. 6, the embodiment shown in FIG. 7, and the embodiment shown in FIG. 9 to the embodiment shown in FIG. 13, and is configured to implement a method corresponding to the network device in the foregoing method embodiments. The network device is, for example, an access network device, a UPF, or an SMF. For a specific function, refer to the descriptions in the foregoing method embodiments. For example, a circuit system is a chip system.

The communication apparatus 1400 includes at least one processor 1401, a communication line 1402, and at least one communication interface 1404. In an optional implementation, the communication apparatus 1400 may further include a memory 1403. Because the memory 1403 is not a function module that needs to be included, but is only a function module that is optionally included, the memory 1403 is represented by a dashed box in FIG. 14.

The processor 1401 may include a general-purpose central processing unit (central processing unit, CPU), a microprocessor, an application-specific integrated circuit (application-specific integrated circuit, ASIC), or one or more integrated circuits for controlling program execution of the solutions in this application.

The communication line 1402 may include a path for transmitting information between the foregoing components.

The communication interface 1404 is any apparatus such as a transceiver, and is configured to communicate with another device or a communication network such as the Ethernet, a radio access network (radio access network, RAN), a wireless local area network (wireless local area network, WLAN), or a wired access network.

The memory 1403 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, and the like), a magnetic disk storage medium, another magnetic storage device, or any other medium that can carry or store expected program code in a form of an instruction or a data structure and that can be accessed by a computer, but is not limited thereto. The memory 1403 may exist independently, and is connected to the processor 1401 through the communication line 1402. Alternatively, the memory 1403 may be integrated with the processor 1401.

The memory 1403 is configured to store computer-executable instructions for executing the solutions in this application, and the processor 1401 controls execution of the computer-executable instructions. The processor 1401 is configured to execute the computer-executable instructions stored in the memory 1403, to implement the communication method provided in the foregoing embodiments of this application.

Optionally, the computer-executable instructions in this embodiment of this application may also be referred to as application program code. This is not specifically limited in this embodiment of this application.

During specific implementation, in an embodiment, the processor 1401 may include one or more CPUs, for example, a CPU 0 and a CPU 1 in FIG. 14.

During specific implementation, in an embodiment, the communication apparatus 1400 may include a plurality of processors, for example, the processor 1401 and a processor 1408 in FIG. 14. Each of these processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 14 is a chip, for example, a chip of an access network device, a chip of a UPF, a chip of an SMF, or a chip of a terminal device, the chip includes a processor 1401 (where the chip may further include a processor 1408), a communication line 1402, a memory 1403, and a communication interface 1404. Specifically, the communication interface 1404 may be an input interface, a pin, a circuit, or the like. The memory 1403 may be a register, a buffer, or the like. The processor 1401 and the processor 1408 may each be a general-purpose CPU, a microprocessor, an ASIC, or one or more integrated circuits for controlling program execution of the communication method in any one of the foregoing embodiments.

In embodiments of this application, the apparatus may be divided into function modules based on the foregoing method examples. For example, each function module may be obtained through division based on each corresponding function, or two or more functions may be integrated into one processing module. The foregoing integrated module may be implemented in a form of hardware, or may be implemented in a form of a software function module. It should be noted that in embodiments of this application, module division is an example, and is merely logical function division. During actual implementation, another division manner may be used. For example, when each function module is obtained through division based on each corresponding function, FIG. 15 is a schematic diagram of an apparatus. The apparatus 1500 may be the access network device, the UPF, the SMF, or the terminal device in the foregoing method embodiments, or may be a chip in the access network device, a chip in the SMF, a chip in the UPF, or a chip in the terminal device. The apparatus 1500 includes a sending unit 1501, a processing unit 1502, and a receiving unit 1503.

It should be understood that the apparatus 1500 may be configured to implement steps performed by the access network device, the UPF, the SMF, or the terminal device in the method in embodiments of this application. For related features, refer to the foregoing embodiments. Details are not described herein again.

Optionally, functions/implementation processes of the sending unit 1501, the receiving unit 1503, and the processing unit 1502 in FIG. 15 may be implemented by the processor 1401 in FIG. 14 by invoking the computer-executable instructions stored in the memory 1403. Alternatively, functions/implementation processes of the processing unit 1502 in FIG. 15 may be implemented by the processor 1401 in FIG. 14 by invoking the computer-executable instructions stored in the memory 1403, and functions/implementation processes of the sending unit 1501 and the receiving unit 1503 in FIG. 15 may be implemented by the communication interface 1404 in FIG. 14.

Optionally, when the apparatus 1500 is a chip or a circuit, functions/implementation processes of the sending unit 1501 and the receiving unit 1503 may alternatively be implemented by a pin, a circuit, or the like.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Various illustrative logical units and circuits described in embodiments of this application may implement or operate the described functions by using a general-purpose processor, a digital signal processor (digital signal processor, DSP), an application-specific integrated circuit (application-specific integrated circuit, ASIC), a field programmable gate array (field programmable gate array, FPGA), or another programmable logic apparatus, a discrete gate or a transistor logic, a discrete hardware component, or any combination of the foregoing designs. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk drive, a removable magnetic disk, a CD-ROM, or a storage medium of any other form in the art. For example, the storage medium may be connected to the processor, to enable the processor to read information from the storage medium and write information to the storage medium. Optionally, the storage medium may alternatively be integrated into the processor. The processor and the storage medium may be disposed in an ASIC, and the ASIC may be disposed in a terminal device. Optionally, the processor and the storage medium may alternatively be disposed in different components of the terminal device.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

The scope of protection is defined according to Art. 69 of the EPC protocol.

## Claims

1. A communication method, comprising:
determining (S408, S605, S704) that content of a to-be-sent second data packet is the same as content of a first data packet, wherein the second data packet is a data packet following the first data packet; and
sending (S409, S606, S705) repetition indication information, wherein the repetition indication information indicates that the second data packet is a data packet that repeats a previous data packet;
wherein the determining that content of a to-be-sent second data packet is the same as content of a first data packet comprises:
detecting a field that is in the second data packet and that is used to carry data; and
determining (S408) that a value of the field that is in the second data packet and that is used to carry data is the same as a value of a field that is in the first data packet and that is used to carry data; and
wherein the determining that a value of the field that is in the second data packet and that is used to carry data is the same as a value of a field that is in the first data packet and that is used to carry data comprises:
performing an exclusive OR operation on the value of the field that is in the second data packet and that is used to carry data and the value of the field that is in the first data packet and that is used to carry data, to obtain an operation result, wherein the operation result is 0.

2. The method according to claim 1, wherein
the repetition indication information is comprised in first signaling; or
the repetition indication information is a compressed data packet, and the compressed data packet is obtained by compressing the second data packet.

3. The method according to any one of claims 1 to 2, wherein the method further comprises:
receiving detection information, wherein the detection information indicates a field that is in a data packet and that is used to carry data.

4. A computer-readable storage medium, wherein the computer-readable storage medium is configured to store a computer program, and when the computer program is run on a computer, the computer is configured to perform the method according to any one of claims 1 to 3.

5. A chip system, wherein the chip system comprises:
a processor and an interface, wherein the processor is configured to invoke instructions from the interface and run the instructions, and when executing the instructions, the processor implements the method according to any one of claims 1 to 3.

6. A computer program product, wherein the computer program product comprises a computer program, and when the computer program is run on a computer, the computer is configured to perform the method according to any one of claims 1 to 3.

7. A first communication apparatus (1500), configured to: determine that content of a to-be-sent second data packet is the same as content of a first data packet, and send repetition indication information, wherein the second data packet is a data packet following the first data packet, and the repetition indication information indicates that the second data packet is a data packet that repeats a previous data packet, wherein to determine that content of a to-be-sent second data packet is the same as content of a first data packet comprises to detect a field that is in the second data packet and that is used to carry data, and to determine (S408) that a value of the field that is in the second data packet and that is used to carry data is the same as a value of a field that is in the first data packet and that is used to carry data, and wherein to determine that a value of the field that is in the second data packet and that is used to carry data is the same as a value of a field that is in the first data packet and that is used to carry data comprises to perform an exclusive OR operation on the value of the field that is in the second data packet and that is used to carry data and the value of the field that is in the first data packet and that is used to carry data, to obtain an operation result, wherein the operation result is 0.

8. The first communication apparatus according to claim 7, wherein
the repetition indication information is comprised in first signaling; or
the repetition indication information is a compressed data packet, and the compressed data packet is obtained by compressing the second data packet.

9. A communication system, comprising the first communication apparatus according to claim 7 or 8, and
a second communication apparatus (1500), configured to: receive the first data packet, receive the repetition indication information, and generate a third data packet based on the repetition indication information, wherein content of the third data packet is the same as the content of the first data packet.

## Patentansprüche

1. Kommunikationsverfahren, umfassend:
Feststellen (S408, S605, S704), dass ein Inhalt eines zu sendenden zweiten Datenpakets derselbe ist wie ein Inhalt eines ersten Datenpakets, wobei das zweite Datenpaket ein auf das erste Datenpaket folgendes Datenpaket ist; und
Senden (S409, S606, S705) von Wiederholungsanzeigeinformationen, wobei die Wiederholungsanzeigeinformationen anzeigen, dass das zweite Datenpaket ein Datenpaket ist, das ein vorheriges Datenpaket wiederholt;
wobei das Feststellen, dass der Inhalt eines zu sendenden zweiten Datenpakets derselbe ist wie der Inhalt eines ersten Datenpakets, Folgendes umfasst:
Erkennen eines Feldes, das sich in dem zweiten Datenpaket befindet und das dazu verwendet wird, Daten zu transportieren; und
Feststellen (S408), dass ein Wert des Feldes, das sich in dem zweiten Datenpaket befindet und das dazu verwendet wird, Daten zu transportieren, derselbe ist wie ein Wert eines Feldes, das sich in dem ersten Datenpaket befindet und das dazu verwendet wird, Daten zu transportieren; und
wobei das Feststellen, dass ein Wert des Feldes, das sich in dem zweiten Datenpaket befindet und das dazu verwendet wird, Daten zu transportieren, derselbe ist wie ein Wert eines Feldes, das sich in dem ersten Datenpaket befindet und das dazu verwendet wird, Daten zu transportieren, Folgendes umfasst:
Durchführen einer Exklusiv-ODER-Operation zwischen dem Wert des Feldes, das sich in dem zweiten Datenpaket befindet und das dazu verwendet wird, Daten zu transportieren, und dem Wert des Feldes, das sich in dem ersten Datenpaket befindet und das dazu verwendet wird, Daten zu transportieren, um ein Operationsergebnis zu erlangen, wobei das Operationsergebnis 0 ist.

2. Verfahren nach Anspruch 1, wobei
die Wiederholungsanzeigeinformationen in der ersten Signalisierung umfasst sind; oder
die Wiederholungsanzeigeinformationen ein komprimiertes Datenpaket sind und das komprimierte Datenpaket durch Komprimieren des zweiten Datenpakets erlangt wird.

3. Verfahren nach einem der Ansprüche 1 bis 2, wobei das Verfahren ferner Folgendes umfasst:
Empfangen von Erkennungsinformationen, wobei die Erkennungsinformationen ein Feld anzeigen, dass sich in einem Datenpaket befindet und das dazu verwendet wird, Daten zu transportieren.

4. Computerlesbares Speichermedium, wobei das computerlesbare Speichermedium dazu konfiguriert ist, ein Computerprogramm zu speichern, und, wenn das Computerprogramm auf einem Computer ausgeführt wird, der Computer dazu konfiguriert ist, das Verfahren nach einem der Ansprüche 1 bis 3 durchzuführen.

5. Chipsystem, wobei das Chipsystem Folgendes umfasst:
einen Prozessor und eine Schnittstelle, wobei der Prozessor dazu konfiguriert ist, Anweisungen von der Schnittstelle aufzurufen und die Anweisungen auszuführen, und, wenn die Anweisungen ausgeführt werden, der Prozessor das Verfahren nach einem der Ansprüche 1 bis 3 umsetzt.

6. Computerprogrammprodukt, wobei das Computerprogrammprodukt ein Computerprogramm umfasst und, wenn das Computerprogramm auf einem Computer ausgeführt wird, der Computer dazu konfiguriert ist, das Verfahren nach einem der Ansprüche 1 bis 3 durchzuführen.

7. Erste Kommunikationsvorrichtung (1500), die zu Folgendem konfiguriert ist: Feststellen, dass ein Inhalt eines zu sendenden zweiten Datenpakets derselbe ist wie ein Inhalt eines ersten Datenpakets, und Senden von Wiederholungsanzeigeinformationen, wobei das zweite Datenpaket ein auf das erste Datenpaket folgendes Datenpaket ist und die Wiederholungsanzeigeinformationen anzeigen, dass das zweite Datenpaket ein Datenpaket ist, das ein vorheriges Datenpaket wiederholt, wobei das Feststellen, dass der Inhalt eines zu sendenden zweiten Datenpakets derselbe ist wie der Inhalt eines ersten Datenpakets, Erkennen eines Feldes, das sich in dem zweiten Datenpaket befindet und das dazu verwendet wird, Daten zu transportieren, und Feststellen (S408), dass ein Wert des Feldes, das sich in dem zweiten Datenpaket befindet und das dazu verwendet wird, Daten zu transportieren, derselbe ist wie ein Wert eines Feldes, das sich in dem ersten Datenpaket befindet und das dazu verwendet wird, Daten zu transportieren, umfasst und wobei das Feststellen, dass ein Wert des Feldes, das sich in dem zweiten Datenpaket befindet und das dazu verwendet wird, Daten zu transportieren, derselbe ist, wie ein Wert eines Feldes, das sich in dem ersten Datenpaket befindet und das dazu verwendet wird, Daten zu transportieren, Durchführen einer Exklusiv-ODER-Operation zwischen dem Wert des Feldes, das sich in dem zweiten Datenpaket befindet und das dazu verwendet wird, Daten zu transportieren, und dem Wert des Feldes, das sich in dem ersten Datenpaket befindet und das dazu verwendet wird, Daten zu transportieren, umfasst, um ein Operationsergebnis zu erlangen, wobei das Operationsergebnis 0 ist.

8. Erste Kommunikationsvorrichtung nach Anspruch 7, wobei die Wiederholungsanzeigeinformationen in der ersten Signalisierung umfasst sind; oder
die Wiederholungsanzeigeinformationen ein komprimiertes Datenpaket sind und das komprimierte Datenpaket durch Komprimieren des zweiten Datenpakets erlangt wird.

9. Kommunikationssystem, umfassend die erste Kommunikationsvorrichtung nach Anspruch 7 oder 8 und
eine zweite Kommunikationsvorrichtung (1500), die zu Folgendem konfiguriert ist: Empfangen des ersten Datenpakets, Empfangen der Wiederholungsanzeigeinformationen und Erzeugen eines dritten Datenpakets auf der Grundlage der Wiederholungsanzeigeinformationen, wobei ein Inhalt des dritten Datenpakets derselbe ist wie der Inhalt des ersten Datenpakets.

## Revendications

1. Procédé de communication, comprenant :
la détermination (S408, S605, S704) qu'un contenu d'un deuxième paquet de données à envoyer est identique au contenu d'un premier paquet de données, dans lequel le deuxième paquet de données est un paquet de données suivant le premier paquet de données ; et
l'envoi (S409, S606, S705) d'informations d'indication de répétition, dans lequel les informations d'indication de répétition indiquent que le deuxième paquet de données est un paquet de données qui répète un paquet de données précédent ;
dans lequel la détermination qu'un contenu d'un deuxième paquet de données à envoyer est identique au contenu d'un premier paquet de données comprend :
la détection d'un champ qui est dans le deuxième paquet de données et qui est utilisé pour transporter des données ; et
la détermination (S408) qu'une valeur du champ qui est dans le deuxième paquet de données et qui est utilisé pour transporter des données est la même qu'une valeur d'un champ qui est dans le premier paquet de données et qui est utilisé pour transporter des données ; et
dans lequel la détermination qu'une valeur du champ qui est dans le deuxième paquet de données et qui est utilisé pour transporter des données est la même qu'une valeur d'un champ qui est dans le premier paquet de données et qui est utilisé pour transporter des données comprend :
la réalisation d'une opération OU exclusive sur la valeur du champ qui est dans le deuxième paquet de données et qui est utilisé pour transporter des données et la valeur du champ qui est dans le premier paquet de données et qui est utilisé pour transporter des données, pour obtenir un résultat d'opération, dans lequel le résultat d'opération est 0.

2. Procédé selon la revendication 1, dans lequel les informations d'indication de répétition sont comprises dans la première signalisation ; ou
les informations d'indication de répétition sont un paquet de données compressé, et le paquet de données compressé est obtenu par la compression du deuxième paquet de données.

3. Procédé selon l'une quelconque des revendications 1 et 2, dans lequel le procédé comprend également :
la réception d'informations de détection, dans lequel les informations de détection indiquent un champ qui est dans un paquet de données et qui est utilisé pour transporter des données.

4. Support de stockage lisible par ordinateur, dans lequel le support de stockage lisible par ordinateur est configuré pour stocker un programme informatique, et lorsque le programme informatique fonctionne sur un ordinateur, l'ordinateur est configuré pour réaliser le procédé selon l'une quelconque des revendications 1 à 3.

5. Système à puce, dans lequel le système à puce comprend :
un processeur et une interface, dans lequel le processeur est configuré pour invoquer des instructions à partir de l'interface et faire fonctionner les instructions, et lors de l'exécution des instructions, le processeur met en œuvre le procédé selon l'une quelconque des revendications 1 à 3.

6. Produit de programme informatique, dans lequel le produit de programme informatique comprend un programme informatique, et lorsque le programme informatique fonctionne sur un ordinateur, l'ordinateur est configuré pour réaliser le procédé selon l'une quelconque des revendications 1 à 3.

7. Premier appareil de communication (1500), configuré pour : déterminer qu'un contenu d'un deuxième paquet de données à envoyer est identique au contenu d'un premier paquet de données, et envoyer des informations d'indication de répétition, dans lequel le deuxième paquet de données est un paquet de données suivant le premier paquet de données, et les informations d'indication de répétition indiquent que le deuxième paquet de données est un paquet de données qui répète un paquet de données précédent, dans lequel le fait de déterminer qu'un contenu d'un deuxième paquet de données à envoyer est identique au contenu d'un premier paquet de données comprend le fait de détecter un champ qui est dans le deuxième paquet de données et qui est utilisé pour transporter des données, et le fait de déterminer (S408) qu'une valeur du champ qui est dans le deuxième paquet de données et qui est utilisé pour transporter des données est identique à une valeur d'un champ qui est dans le premier paquet de données et qui est utilisé pour transporter des données, et dans lequel le fait de déterminer qu'une valeur du champ qui est dans le deuxième paquet de données et qui est utilisé pour transporter des données est identique à une valeur d'un champ qui est dans le premier paquet de données et qui est utilisé pour transporter des données comprend le fait de réaliser une opération OU exclusive sur la valeur du champ qui est dans le deuxième paquet de données et qui est utilisé pour transporter des données et la valeur du champ qui est dans le premier paquet de données et qui est utilisé pour transporter des données, pour obtenir un résultat d'opération, dans lequel le résultat d'opération est 0.

8. Premier appareil de communication selon la revendication 7, dans lequel
les informations d'indication de répétition sont comprises dans la première signalisation ; ou
les informations d'indication de répétition sont un paquet de données compressé, et le paquet de données compressé est obtenu par la compression du deuxième paquet de données.

9. Système de communication comprenant le premier appareil de communication selon la revendication 7 ou 8, et
un second appareil de communication (1500), configuré pour :
recevoir le premier paquet de données, recevoir les informations d'indication de répétition, et générer un troisième paquet de données sur la base des informations d'indication de répétition, dans lequel le contenu du troisième paquet de données est identique au contenu du premier paquet de données.
